(19) Europäisches Patentamt
European Patent Office
Office européen des brevets

(11) **EP 4 297 308 A1**

(12) **EUROPEAN PATENT APPLICATION**
published in accordance with Art. 153(4) EPC

(43) Date of publication:
**27.12.2023 Bulletin 2023/52**

(21) Application number: **22766201.2**

(22) Date of filing: **02.03.2022**

(51) International Patent Classification (IPC):
**H04L 1/00** (2006.01)

(52) Cooperative Patent Classification (CPC):
**H04L 1/00; H04W 4/70**

(86) International application number:
**PCT/CN2022/078788**

(87) International publication number:
**WO 2022/188675 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2021 CN 202110251150
30.04.2021 CN 202110480107**

(71) Applicant: **Huawei Technologies Co., Ltd.
Shenzhen, Guangdong 518129 (CN)**

(72) Inventors:
• **WANG, Bichai
Shenzhen, Guangdong 518129 (CN)**
• **LI, Xueru
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION DEVICE**

(57) This application provides a communication method and a communication apparatus. The method includes: A first terminal device receives first indication information of a second terminal device, where the first indication information indicates demodulation reference signal DMRS information of the second terminal device, and a time-frequency resource selected by the second terminal device overlaps a time-frequency resource selected by the first terminal device; and the first terminal device determines DMRS information of the first terminal device based on the first indication information of the second terminal device, where the DMRS information includes a DMRS sequence and/or a DMRS port. In the solution provided in this application, a possibility of selecting a proper DMRS sequence and/or DMRS port can be improved, to reduce DMRS interference between terminal devices, so that channel estimation performance can be improved, and reliable communication can be implemented.

300

```
A first terminal device receives first indication information of a second
terminal device, where the first indication information indicates
demodulation reference signal DMRS information of the second
terminal device, and a time-frequency resource selected by the second
terminal device overlaps a time-frequency resource selected by the first
terminal device
```
— S310

```
The first terminal device determines DMRS information of the first
terminal device based on the first indication information of the second
terminal device
```
— S320

FIG. 3

EP 4 297 308 A1

**Description**

This application claims priority to Chinese Patent Application No. 202110251150.X, filed with the China National Intellectual Property Administration on March 8, 2021 and entitled "SIDELINK DMRS SELECTION METHOD", and Chinese Patent Application No. 202110480107.0, filed with the China National Intellectual Property Administration on April 30, 2021 and entitled "COMMUNICATION METHOD AND COMMUNICATION APPARATUS", which are incorporated herein by reference in their entireties.

**TECHNICAL FIELD**

Embodiments of this application relate to the communication field, and in particular, to a communication method and a communication apparatus.

**BACKGROUND**

A communication system may be based on downlink (downlink, DL) communication and uplink (uplink, UL) communication in a network. Different from the DL communication and the UL communication, sidelink (sidelink, SL) communication may support direct communication between terminal devices. To be specific, user data is directly transmitted between terminal devices. In this way, user data in cellular communication can be prevented from being forwarded and transmitted through a network, to reduce a transmission delay, and relieve a network load.

An SL includes two resource allocation modes. One is a network control mode. To be specific, an SL communication resource may be scheduled by a base station. The other is a distributed mode. To be specific, a terminal device may spontaneously select an SL communication resource from a pre-configured SL resource pool. For an in-coverage (in-coverage) terminal device, the network control mode and/or the distributed mode may be used. For an out-of-coverage (out-of-coverage) terminal device, the distributed mode may be used.

The terminal devices may perform channel estimation by using a demodulation reference signal (demodulation reference signal, DMRS), to perform data demodulation by using an estimated channel. A physical sidelink shared channel (physical sidelink shared channel, PSSCH) DMRS in a conventional SL system supports at most two orthogonal ports for a single user, and a pseudo-orthogonal DMRS sequence is used between different TX UEs. In other words, in conventional technologies, it can only be ensured that different DMRS ports of a same terminal device are orthogonal to each other, but DMRS ports of different terminal devices cannot be orthogonal to each other. For a scenario in which a quantity of ports of a terminal device is small (for example, a wearable device may have only one port), even if a plurality of orthogonal ports are available, DMRS ports of different terminal devices cannot be orthogonal. As a result, DMRS interference is high between terminal devices whose time-frequency resources overlap. Moreover, a channel estimation error may be large, and therefore reliable communication cannot be implemented.

**SUMMARY**

This application provides a communication method and a communication apparatus, so that a possibility that DMRS ports of different terminal devices are orthogonal can be improved, to reduce DMRS interference between the terminal devices, so that channel estimation performance can be improved, and reliable communication can be implemented.

According to a first aspect, a communication method is provided. The method includes: A first terminal device receives first indication information of a second terminal device, where the first indication information indicates demodulation reference signal DMRS information of the second terminal device, and a time-frequency resource selected by the second terminal device overlaps a time-frequency resource selected by the first terminal device; and

the first terminal device determines DMRS information of the first terminal device based on the first indication information of the second terminal device, where
the DMRS information includes a DMRS sequence and/or a DMRS port.

In the solution provided in this application, the first terminal device may determine the DMRS information of the first terminal device based on the received first indication information indicating the DMRS information of the second terminal device. In other words, when determining the DMRS information of the first terminal device, the first terminal device may refer to the DMRS information of the second terminal device. In this way, a possibility of selecting a proper DMRS sequence and/or DMRS port can be improved, to reduce DMRS interference between terminal devices, so that channel estimation performance can be improved, and reliable communication can be implemented.

With reference to the first aspect, in some possible implementations, the DMRS port of the first terminal device is orthogonal to a DMRS port of at least one terminal device in the second terminal device.

In the solution provided in this application, the DMRS port determined by the first terminal device is orthogonal to the DMRS port of the at least one terminal device in the second terminal device. Because the DMRS port determined by the first terminal device is orthogonal to the DMRS port of the at least one terminal device in the second terminal device, the DMRS interference between terminal devices can be reduced, so that the channel estimation performance can be improved, and the reliable communication can be implemented.

With reference to the first aspect, in some possible implementations, that the first terminal device determines DMRS information of the first terminal device based on the first indication information of the second terminal device includes that

the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or

the DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device; or

the DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device; or

the DMRS information of the first terminal device determined by the first terminal device enables the DMRS information of the first terminal device to be different from the DMRS information of the second terminal device; or

the DMRS sequence of the first terminal device is initialized and generated based on a cyclic redundancy check CRC of a first physical sidelink control channel PSCCH of the first terminal device.

In the solution provided in this application, the first terminal device may determine the DMRS information of the first terminal device in any of the foregoing manners, so that the DMRS port determined by the first terminal device is as orthogonal as possible to the DMRS port of the second terminal device, to improve the channel estimation performance and implement the reliable communication.

With reference to the first aspect, in some possible implementations, the DMRS information of the first terminal device determined by the first terminal device enables the DMRS port of the first terminal device to be orthogonal to the DMRS port of the third terminal device, and enables the DMRS information of the first terminal device to be different from DMRS information of a device other than the third terminal device in the second terminal device; or

the DMRS information of the first terminal device determined by the first terminal device enables the DMRS port of the first terminal device to be orthogonal to the DMRS port of the third terminal device, and enables the DMRS information of the first terminal device to be different from DMRS information of a fifth terminal device, where the fifth terminal device includes a terminal device whose service priority is not lower than the service priority of the first terminal device and that is in the second terminal device.

In the solution provided in this application, in addition to that the DMRS port determined by the first terminal device is orthogonal to the DMRS port of the third terminal device, the DMRS information determined by the first terminal device may also be different from DMRS information of some devices in the second terminal device. The DMRS port determined by the first terminal device is orthogonal to the DMRS port of the third terminal device, and the DMRS information determined by the first terminal device is also different from DMRS information of another terminal device (for example, a device other than the third terminal device in the second terminal device, or a terminal device whose service priority is not lower than the service priority of the first terminal device and that is in the second terminal device), in other words, the DMRS information determined by the first terminal device is different from the DMRS information of the second terminal device, so that the channel estimation performance can be improved, and the reliable communication can be implemented.

With reference to the first aspect, in some possible implementations, the DMRS information of the first terminal device determined by the first terminal device enables the DMRS port of the first terminal device to be orthogonal to the DMRS port of the fourth terminal device, and enables the DMRS information of the first terminal device determined by the first terminal device to be different from DMRS information of a device other than the fourth terminal device in the third terminal device; or

the DMRS information of the first terminal device determined by the first terminal device enables the DMRS port of the first terminal device to be orthogonal to the DMRS port of the fourth terminal device, and enables the DMRS information of the first terminal device to be different from the DMRS information of the fifth terminal device, where the fifth terminal device includes a terminal device whose service priority is not lower than the service priority of the first terminal device and that is in the second terminal device.

In the solution provided in this application, in addition to that the DMRS port determined by the first terminal device is orthogonal to the DMRS port of the fourth terminal device, the DMRS information determined by the first terminal device may also be different from DMRS information of some devices in the third terminal device. The DMRS port determined by the first terminal device is orthogonal to the DMRS port of the fourth terminal device, and the DMRS information determined by the first terminal device is also different from DMRS information of another terminal device (for example, a device other than the fourth terminal device in the third terminal device, or a terminal device whose service priority is not lower than the service priority of the first terminal device and that is in the second terminal device), in other words, the DMRS information determined by the first terminal device is different from the DMRS information of the third terminal device or the second terminal device, so that the channel estimation performance can be improved, and the reliable communication can be implemented.

With reference to the first aspect, in some possible implementations, that the first terminal device determines DMRS information of the first terminal device based on the first indication information of the second terminal device includes that

the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or

the DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device; or

the DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device; or

the DMRS information of the first terminal device determined by the first terminal device enables the DMRS information of the first terminal device to be different from the DMRS information of the second terminal device; or

the DMRS sequence of the first terminal device is initialized and generated based on a cyclic redundancy check CRC of a first physical sidelink control channel PSCCH of the first terminal device.

In the solution provided in this application, the first terminal device may sequentially determine the DMRS information of the first terminal device based on the foregoing sorting. In this design, the DMRS port determined by the first terminal device may be preferentially as orthogonal as possible to the DMRS port of the second terminal device. If it cannot be met, the DMRS port determined by the first terminal device may be as orthogonal as possible to DMRS ports of some terminal devices in the second terminal device. If it cannot be met, the DMRS information determined by the first terminal device may be different from the DMRS information of the second terminal device. If it still cannot be met, the DMRS sequence of the first terminal device may be initialized and generated based on the CRC of the first PSCCH of the first terminal device. Based on this design, it may be preferentially ensured that the DMRS port of the first terminal device is orthogonal to the DMRS port of the second terminal device. If it cannot be ensured, the DMRS port of the first terminal device may be orthogonal to DMRS ports of some terminal devices in the second terminal device, or the DMRS information determined by the first terminal device may be different from the DMRS information of the second terminal device, to improve the channel estimation performance as much as possible, and implement the reliable communication.

With reference to the first aspect, in some possible implementations, the DMRS information of the first terminal device determined by the first terminal device enables the DMRS port of the first terminal device to be orthogonal to the DMRS port of the fifth terminal device, and enables the DMRS information of the first terminal device to be different from DMRS information of a device other than the fifth terminal device in the second terminal device; or

the DMRS information of the first terminal device determined by the first terminal device enables the DMRS port of the first terminal device to be orthogonal to the DMRS port of the fifth terminal device, and enables the DMRS information of the first terminal device to be different from the DMRS information of the third terminal device, where the third terminal device includes a terminal device whose RSRP is greater than the first threshold in the second terminal device.

In the solution provided in this application, in addition to that the DMRS port determined by the first terminal device is orthogonal to the DMRS port of the fifth terminal device, the DMRS information determined by the first terminal device may also be different from DMRS information of some devices in the fifth terminal device. The DMRS port determined by the first terminal device is orthogonal to the DMRS port of the fifth terminal device, and the DMRS information determined by the first terminal device is also different from DMRS information of another terminal device (for example, a device other than the fifth terminal device in the second terminal device, or a terminal device whose RSRP is greater than the first threshold in the second terminal device), in other words, the DMRS information determined by the first terminal device is different from the DMRS information of the second terminal device, so that the channel estimation performance can be improved, and the reliable communication can be implemented.

With reference to the first aspect, in some possible implementations, the DMRS information of the first terminal device determined by the first terminal device enables the DMRS port of the first terminal device to be orthogonal to the DMRS port of the sixth terminal device, and enables the DMRS information of the first terminal device to be different from DMRS information of a device other than the sixth terminal device in the fifth terminal device; or

the DMRS information of the first terminal device determined by the first terminal device enables the DMRS port of the first terminal device to be orthogonal to the DMRS port of the sixth terminal device, and enables the DMRS information of the first terminal device to be different from the DMRS information of the fifth terminal device.

In the solution provided in this application, in addition to that the DMRS port determined by the first terminal device is orthogonal to the DMRS port of the sixth terminal device, the DMRS information determined by the first terminal device may also be different from DMRS information of some devices in the sixth terminal device. The DMRS port determined by the first terminal device is orthogonal to the DMRS port of the sixth terminal device, and the DMRS information determined by the first terminal device is also different from DMRS information of another terminal device (for example, a device other than the sixth terminal device in the fifth terminal device, or the fifth terminal device), in other words, the DMRS information determined by the first terminal device is different from the DMRS information of the fifth terminal device, so that the channel estimation performance can be improved, and the reliable communication can be implemented.

With reference to the first aspect, in some possible implementations, the method further includes the following step.

The first terminal device generates k initialized sequences based on second indication information, where each sequence in the k initialized sequences is for generating one DMRS sequence, and k is an integer greater than or equal to 1.

That the first terminal device determines DMRS information of the first terminal device based on the first indication information of the second terminal device includes that

the first terminal device selects, based on the first indication information of the second terminal device, an initialized sequence from the k initialized sequences to generate a DMRS sequence, where a DMRS sequence of the first terminal device belongs to DMRS sequences generated by using the k initialized sequences.

In the solution provided in this application, the first terminal device may generate the k initialized sequences based on an indication of the second indication information, and select a proper sequence from the k initialized sequences to generate the DMRS sequence based on the first indication information indicating the DMRS information of the second terminal device. The DMRS sequence determined by the first terminal device is generated based on an initialized sequence selected from the k initialized sequences, in other words, the first terminal device selects different initialized sequences to generate different DMRS sequences, so that diversity of DMRS sequences determined by the first terminal device can be increased, to minimize a possibility that the DMRS information of the first terminal device is the same as that of another terminal device. Moreover, the channel estimation performance can be improved, and the reliable communication can be implemented.

With reference to the first aspect, in some possible implementations, the second indication information is pre-configuration information of the first terminal device; or

the second indication information is indication information sent by a network device; or
the second indication information is indication information sent by another terminal device other than the first terminal device.

With reference to the first aspect, in some possible implementations, the second indication information indicates at least one piece of the following information: an initial group identity GID, a quantity k of initialized sequences, and a step size $\omega$; and

that the first terminal device generates k initialized sequences based on second indication information includes that the first terminal device generates the k initialized sequences based on the following formula:

$$VID_i = GID + i * \varpi ,$$

where i is a positive integer not greater than k.

In the solution provided in this application, the first terminal device may generate the k initialized sequences based on the foregoing formula, and the first terminal device may select a proper initialized sequence from the k initialized sequences to generate the DMRS sequence. The DMRS sequence determined by the first terminal device is generated based on an initialized sequence selected from the k initialized sequences, in other words, the first terminal device selects different initialized sequences to generate different DMRS sequences, so that diversity of DMRS sequences determined by the first terminal device can be increased, to minimize a possibility that the DMRS information of the first terminal device is the same as that of another terminal device. Moreover, the channel estimation performance can be improved, and the reliable communication can be implemented.

With reference to the first aspect, in some possible implementations, the method further includes the following step.

The first terminal device increases preset ports selectable by the first terminal device by introducing a DMRS port of 1/4 hybrid frequency domain density, where the preset ports include the DMRS port included in the DMRS information of the first terminal device determined by the first terminal device, and the DMRS port of 1/4 hybrid frequency domain density is orthogonal to a DMRS port of 1/2 hybrid frequency domain density.

In the solution provided in this application, the first terminal device increases the preset ports selectable by the first terminal device by introducing the DMRS port of 1/4 hybrid frequency domain density, so that a quantity of orthogonal DMRS ports can be increased without increasing a time-frequency resource.

With reference to the first aspect, in some possible implementations, the method further includes the following step.

The first terminal device sends third indication information, where the third indication information indicates the DMRS port of the first terminal device, and a quantity of bits occupied by the third indication information is $\left\lceil \log_2 C_n^m \right\rceil$, where a quantity of the preset ports is n, and a quantity of DMRS ports included in the DMRS information of the first terminal device determined by the first terminal device is m.

With reference to the first aspect, in some possible implementations, the method further includes the following steps.

The first terminal device continues to receive the first indication information after determining the DMRS information of the first terminal device; and

the first terminal device re-determines the DMRS information of the first terminal device if a first condition is met.

In the solution provided in this application, after determining the DMRS information of the first terminal device, the first terminal device continues to receive the first indication information of the second terminal device, and re-determines the DMRS information of the first terminal device when the first condition is met. The first terminal device may adjust the DMRS information determined by the first terminal device in real time based on information indicated by the first indication information, so that the DMRS port determined by the first terminal device is as orthogonal as possible to the DMRS port of the second terminal device at each moment, to improve the channel estimation performance can be improved, and implement the reliable communication.

With reference to the first aspect, in some possible implementations, the first condition includes at least one of the following conditions:

the DMRS information of the first terminal device is the same as the DMRS information of the fifth terminal device, where the fifth terminal device includes a terminal device whose service priority is not lower than the service priority of the first terminal device and that is in the second terminal device; and
a quantity of ports of the first terminal device changes.

According to a second aspect, a communication method is provided. The method includes: A first terminal device receives first indication information of a second terminal device, where the first indication information indicates an index of an initialized sequence and a DMRS port that are of the second terminal device, and a time-frequency resource selected by the second terminal device overlaps a time-frequency resource selected by the first terminal device; and

the first terminal device determines DMRS information of the first terminal device based on the first indication information of the second terminal device, where the DMRS information includes a DMRS sequence and/or a DMRS port.

In the solution provided in this application, the first terminal device may determine the DMRS information of the first terminal device based on the received first indication information indicating the index of the initialized sequence and the DMRS port that are of the second terminal device. In other words, when determining the DMRS information of the first terminal device, the first terminal device may refer to related information of the second terminal device. In this way, a possibility of selecting a proper DMRS sequence and/or DMRS port can be improved, to reduce DMRS interference between terminal devices, to improve channel estimation performance, and implement reliable communication.

With reference to the second aspect, in some possible implementations, the DMRS port of the first terminal device is orthogonal to a DMRS port of at least one terminal device in the second terminal device.

With reference to the second aspect, in some possible implementations, that the first terminal device determines DMRS information of the first terminal device based on the first indication information of the second terminal device includes that

the first terminal device determines the DMRS information of the first terminal device based on the first indication information of the second terminal device in at least one of the following manners:
the DMRS information of the first terminal device determined by the first terminal device enables the DMRS port of the first terminal device to be orthogonal to the DMRS port of the second terminal device; or
the DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device; or
the DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device; or
the DMRS information of the first terminal device determined by the first terminal device enables the DMRS information of the first terminal device to be different from the DMRS information of the second terminal device; or
the DMRS sequence of the first terminal device is initialized and generated based on a cyclic redundancy check CRC of a first physical sidelink control channel PSCCH of the first terminal device.

With reference to the second aspect, in some possible implementations, the DMRS information of the first terminal device determined by the first terminal device enables the DMRS port of the first terminal device to be orthogonal to the DMRS port of the third terminal device, and enables the DMRS information of the first terminal device to be different from DMRS information of a device other than the third terminal device in the second terminal device; or
the DMRS information of the first terminal device determined by the first terminal device enables the DMRS port of the first terminal device to be orthogonal to the DMRS port of the third terminal device, and enables the DMRS information of the first terminal device to be different from DMRS information of a fifth terminal device, where the fifth terminal device includes a terminal device whose service priority is not lower than the service priority of the first terminal device and that is in the second terminal device.

With reference to the second aspect, in some possible implementations, the DMRS information of the first terminal device determined by the first terminal device enables the DMRS port of the first terminal device to be orthogonal to the DMRS port of the fourth terminal device, and enables the DMRS information of the first terminal device determined by the first terminal device to be different from DMRS information of a device other than the fourth terminal device in the third terminal device; or
the DMRS information of the first terminal device determined by the first terminal device enables the DMRS port of the first terminal device to be orthogonal to the DMRS port of the fourth terminal device, and enables the DMRS information of the first terminal device to be different from the DMRS information of the fifth terminal device, where the fifth terminal device includes a terminal device whose service priority is not lower than the service priority of the first terminal device and that is in the second terminal device.

With reference to the second aspect, in some possible implementations, that the first terminal device determines DMRS information of the first terminal device based on the first indication information of the second terminal device includes that
the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or
the DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device; or
the DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device; or
the DMRS information of the first terminal device determined by the first terminal device enables the DMRS information of the first terminal device to be different from the DMRS information of the second terminal device; or
the DMRS sequence of the first terminal device is initialized and generated based on a cyclic redundancy check CRC of a first physical sidelink control channel PSCCH of the first terminal device.

With reference to the second aspect, in some possible implementations, the DMRS information of the first terminal device determined by the first terminal device enables the DMRS port of the first terminal device to be orthogonal to the DMRS port of the fifth terminal device, and enables the DMRS information of the first terminal device to be different from DMRS information of a device other than the fifth terminal device in the second terminal device; or

the DMRS information of the first terminal device determined by the first terminal device enables the DMRS port of the first terminal device to be orthogonal to the DMRS port of the fifth terminal device, and enables the DMRS information of the first terminal device to be different from the DMRS information of the third terminal device, where the third terminal device includes a terminal device whose RSRP is greater than the first threshold in the second terminal device.

With reference to the second aspect, in some possible implementations, the DMRS information of the first terminal device determined by the first terminal device enables the DMRS port of the first terminal device to be orthogonal to the DMRS port of the sixth terminal device, and enables the DMRS information of the first terminal device to be different from DMRS information of a device other than the sixth terminal device in the fifth terminal device; or

the DMRS information of the first terminal device determined by the first terminal device enables the DMRS port of the first terminal device to be orthogonal to the DMRS port of the sixth terminal device, and enables the DMRS information of the first terminal device to be different from the DMRS information of the fifth terminal device.

With reference to the second aspect, in some possible implementations, the method further includes the following step.

The first terminal device obtains second indication information, where the second indication information indicates k initialized sequences, and k is an integer greater than or equal to 1.

That the first terminal device determines DMRS information of the first terminal device based on the first indication information of the second terminal device includes that

the first terminal device determines, based on the first indication information of the second terminal device and the second indication information, an initialized sequence of the terminal device from the k initialized sequences to generate a DMRS sequence, where a DMRS sequence of the first terminal device belongs to DMRS sequences generated by using the k initialized sequences.

With reference to the second aspect, in some possible implementations, the second indication information is pre-configuration information of the first terminal device; or

the second indication information is indication information sent by a network device; or
the second indication information is indication information sent by another terminal device other than the first terminal device.

With reference to the second aspect, in some possible implementations, the second indication information indicates at least one piece of the following information: an initial group identity GID, a quantity k of initialized sequences, and a step size $\omega$; and

the k initialized sequences include:

$$VID_i = GID + i * \varpi ,$$

where i is a positive integer not greater than k.

With reference to the second aspect, in some possible implementations, the method further includes the following step.

The first terminal device increases preset ports selectable by the first terminal device by introducing a DMRS port of 1/4 hybrid frequency domain density, where the preset ports include the DMRS port included in the DMRS information of the first terminal device determined by the first terminal device, and the DMRS port of 1/4 hybrid frequency domain density is orthogonal to a DMRS port of 1/2 hybrid frequency domain density.

With reference to the second aspect, in some possible implementations, the method further includes the following step.

The first terminal device sends third indication information, where the third indication information indicates the DMRS port of the first terminal device, and a quantity of bits occupied by the third indication information is $\left\lceil \log_2 C_n^m \right\rceil$, where

a quantity of the preset ports is n, and a quantity of DMRS ports included in the DMRS information of the first terminal device determined by the first terminal device is m.

With reference to the second aspect, in some possible implementations, the method further includes the following steps.

The first terminal device continues to receive the first indication information after determining the DMRS information of the first terminal device; and

the first terminal device re-determines the DMRS information of the first terminal device if a first condition is met.

With reference to the second aspect, in some possible implementations, the first condition includes at least one of the following conditions:

the DMRS information of the first terminal device is the same as the DMRS information of the fifth terminal device, where the fifth terminal device includes a terminal device whose service priority is not lower than the service priority of the first terminal device and that is in the second terminal device; and

a quantity of ports of the first terminal device changes.

For beneficial effects of the possible implementations of the second aspect, refer to related content of the first aspect. Details are not described herein again.

According to a third aspect, a communication apparatus is provided. For beneficial effects, refer to the description of the first aspect. Details are not described herein again. The communication apparatus has a function of implementing behaviors in the method embodiment of the first aspect. The function may be implemented by hardware, or may be implemented by hardware by executing corresponding software. The hardware or the software includes one or more modules corresponding to the foregoing function. In a possible design, the communication apparatus includes: a communication module, configured to receive first indication information of a second terminal device, where the first indication information indicates demodulation reference signal DMRS information of the second terminal device, and a time-frequency resource selected by the second terminal device overlaps a time-frequency resource selected by the communication apparatus; and a processing module, configured to determine DMRS information of the communication apparatus based on the first indication information of the second terminal device, where The DMRS information includes a DMRS sequence and/or a DMRS port. Such modules may perform corresponding functions in the method example in the foregoing first aspect. Specifically, refer to the detailed description in the method example. Details are not described herein again.

According to a fourth aspect, a communication apparatus is provided. For beneficial effects, refer to the description of the second aspect. Details are not described herein again. The communication apparatus has a function of implementing behaviors in the method example of the second aspect. The function may be implemented by hardware, or may be implemented by hardware by executing corresponding software. The hardware or the software includes one or more modules corresponding to the foregoing function. In a possible design, the communication apparatus includes: a communication module, configured to receive first indication information of a second terminal device, where the first indication information indicates an index of an initialized sequence and a demodulation reference signal DMRS port that are of the second terminal device, and a time-frequency resource selected by the second terminal device overlaps a time-frequency resource selected by the communication apparatus; and a processing module, configured to determine DMRS information of the communication apparatus based on the first indication information of the second terminal device, where the DMRS information includes a DMRS sequence and/or a DMRS port. Such modules may perform corresponding functions in the method example in the foregoing second aspect. Specifically, refer to the detailed description in the method example. Details are not described herein again.

According to a fifth aspect, a communication apparatus is provided. The communication apparatus may be a terminal device in the foregoing method embodiments, or a chip disposed in the terminal device. The communication apparatus includes a transceiver and a processor, and optionally, further includes a memory. The memory is configured to store a computer program or instructions. The processor is coupled to the memory and the transceiver. When the processor executes the computer program or the instructions, the communication apparatus is enabled to perform the method performed by the terminal device in the foregoing method embodiments.

According to a sixth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

Optionally, the discrete component may be an interface or an interface circuit.

Optionally, the processor may also be a processing circuit.

According to a seventh aspect, this application provides a computer-readable storage medium. The computer-readable storage medium stores a computer program. When the computer program is run, the method performed by the terminal device in the foregoing aspects is implemented.

According to an eighth aspect, a computer program product is provided. The computer program product includes computer program code, where when the computer program code is run, the method performed by the terminal device in the foregoing aspects is performed.

BRIEF DESCRIPTION OF DRAWINGS

FIG. 1 is a schematic diagram of a wireless communication system applicable to an embodiment of this application;
FIG. 2 is a schematic diagram of an OFDM time-frequency resource according to an embodiment of this application;
FIG. 3 is a schematic diagram of a communication method according to an embodiment of this application;
FIG. 4 is a schematic diagram of another OFDM time-frequency resource according to an embodiment of this application;
FIG. 5 is a schematic diagram of a group-based communication manner according to an embodiment of this application;
FIG. 6(a) and FIG. 6(b) are a schematic diagram of still another OFDM time-frequency resource according to an embodiment of this application;
FIG. 7 is a schematic diagram of yet another OFDM time-frequency resource according to an embodiment of this application;
FIG. 8 is a schematic diagram of another communication method according to an embodiment of this application;
FIG. 9 is a schematic block diagram of a communication apparatus according to an embodiment of this application;
FIG. 10 is a schematic block diagram of another communication apparatus according to an embodiment of this application;
FIG. 11 is a schematic block diagram of still another communication apparatus according to an embodiment of this application; and
FIG. 12 is a schematic diagram of a structure of a chip according to an embodiment of this application.

DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) wireless communication system, a new radio (new radio, NR) communication system, a future wireless communication system, and the like.

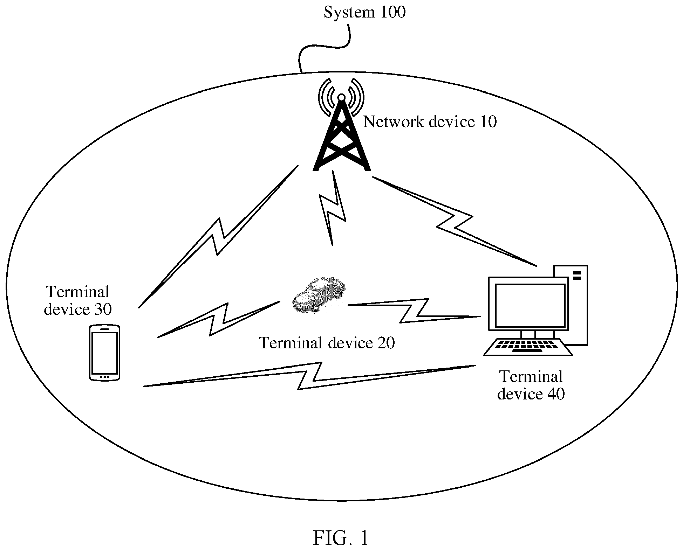

FIG. 1 is a schematic diagram of a wireless communication system 100 applicable to an embodiment of this application. As shown in FIG. 1, the wireless communication system 100 may include one or more network devices, for example, a network device 10 shown in FIG. 1. The wireless communication system 100 may further include one or more terminal devices (also referred to as user equipment (user equipment, UE)), for example, a terminal device 20, a terminal device 30, and a terminal device 40 shown in FIG. 1. The three terminal devices, namely, the terminal device 20, the terminal device 30, and the terminal device 40, may communicate with each other.

It should be understood that, FIG. 1 is only a schematic diagram, and the communication system may further include another network device, for example, may further include a core network device, a wireless relay device, and a wireless backhaul device that are not shown in FIG. 1. Quantities of network devices and terminal devices included in the wireless communication system are not limited in embodiments of this application.

In the wireless communication system 100, the terminal device 20, the terminal device 30, and the terminal device 40 in this embodiment of this application may also be referred to as terminals, terminal devices, mobile stations (mobile stations, MSs), mobile terminals (mobile terminals, MTs), or the like. The terminal device in this embodiment of this application may be a mobile phone (mobile phone), a tablet computer (Pad), or a computer with a wireless transceiver function, or may be a wireless terminal used in a scenario such as virtual reality (virtual reality, VR), augmented reality (augmented reality, AR), industrial control (industrial control), self driving (self driving), remote medical (remote medical), smart grid (smart grid), transportation safety (transportation safety), smart city (smart city), or smart home (smart home). In this application, the foregoing terminal device and a chip that may be applied to the foregoing terminal device are collectively referred to as terminal devices. It should be understood that, a specific technology and a specific device form that are used by the terminal device are not limited in this embodiment of this application.

The network device 10 in this embodiment of this application may be a device configured to communicate with a terminal device. The network device may be a base station, an evolved nodeB (evolved nodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like; or may be a gNB in an NR system; or may be a component or a part of devices constituting a base station, such as a central unit (central unit, CU), a distributed unit (distributed unit, DU), or a baseband unit (baseband unit, BBU). It should be understood that, a specific technology and a specific device form that are used by the network device are not limited in this embodiment of this application. In this application, the network device may be a network device, or may be a chip applied to the network device to complete a wireless communication processing function.

It should be understood that, in this embodiment of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system layer may be any one or more types of computer operating systems that implement service processing through a process (process), for example, a Linux operating system, a Unix operating system, an Android operating system, an IOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include, but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive).

In addition, various storage media described in this specification may indicate one or more devices and/or other machine-readable storage media that are used to store information. The term "machine-readable storage media" may include, but are not limited to: a radio channel, and various other media that can store, contain and/or carry instructions and/or data.

It should be further understood that, division into the manners, cases, categories, and embodiments in embodiments of this application is merely intended for ease of description, and should not constitute a particular limitation. The features in the manners, categories, cases, and embodiments may be combined without contradiction.

It should be further understood that, "first", "second", and "third" in embodiments of this application are merely used for differentiation, and should not constitute any limitation on this application. For example, "first indication information" and "second indication information" in embodiments of this application indicate information transmitted between terminal devices, or indicate information transmitted between a terminal device and a network device.

It should be further understood that, sequence numbers of processes do not mean execution sequences in embodiments of this application. The execution sequences of the processes should be determined based on functions and internal logic of the processes, and should not be construed as any limitation on the implementation processes of embodiments of this application.

It should also be noted that, in this embodiment of this application, "presetting", "predefining", "pre-configuring", and the like may be implemented by pre-storing, in a device (for example, including a terminal device and a network device), corresponding code, a table, or in another manner that may be used to indicate related information. This application imposes no limitation on a specific implementation, for example, pre-configured information in embodiments of this application.

It should also be noted that, the term "and/or" is an association relationship for describing associated objects and indicates that three relationships may exist. For example, A and/or B may indicate the following three cases: Only A exists, both A and B exist, and only B exists. A character "/" generally indicates an "or" relationship between the associated objects.

The communication system may be based on DL communication and UL communication in a network. Different from the DL communication and the UL communication, SL communication may support direct communication between terminal devices. To be specific, user data is directly transmitted between terminal devices. In this way, user data in cellular communication can be prevented from being forwarded and transmitted through a network, to reduce a transmission delay, and relieve a network load.

An SL includes two resource allocation modes. One is a network control mode. To be specific, an SL communication resource may be scheduled by a base station. The other is a distributed mode. To be specific, a terminal device may spontaneously select an SL communication resource from a pre-configured SL resource pool. For an in-coverage terminal device, the network control mode and/or the distributed mode may be used. For an out-of-coverage terminal device, the distributed mode may be used.

A terminal device (for example, a receiving terminal device (receiving UE, RX UE)) and a terminal device (for example, transmitting terminal device (transmitting UE, TX UE)) may perform channel estimation by using a DMRS, to perform data demodulation by using an estimated channel. A PSSCH DMRS in a conventional SL system supports at most two orthogonal ports for a single user, and a pseudo-orthogonal DMRS sequence is used between different TX UEs. In other words, in conventional technologies, it can only be ensured that different DMRS ports of a same terminal device are orthogonal to each other, but DMRS ports of different terminal devices cannot be orthogonal to each other. For a scenario in which a quantity of ports of a terminal device is small (for example, a wearable device may have only one port), even if a plurality of orthogonal ports are available, DMRS ports of different terminal devices cannot be orthogonal. As a result, DMRS interference is high between terminal devices whose time-frequency resources overlap. Moreover, a channel estimation error may be large, and therefore reliable communication cannot be implemented.

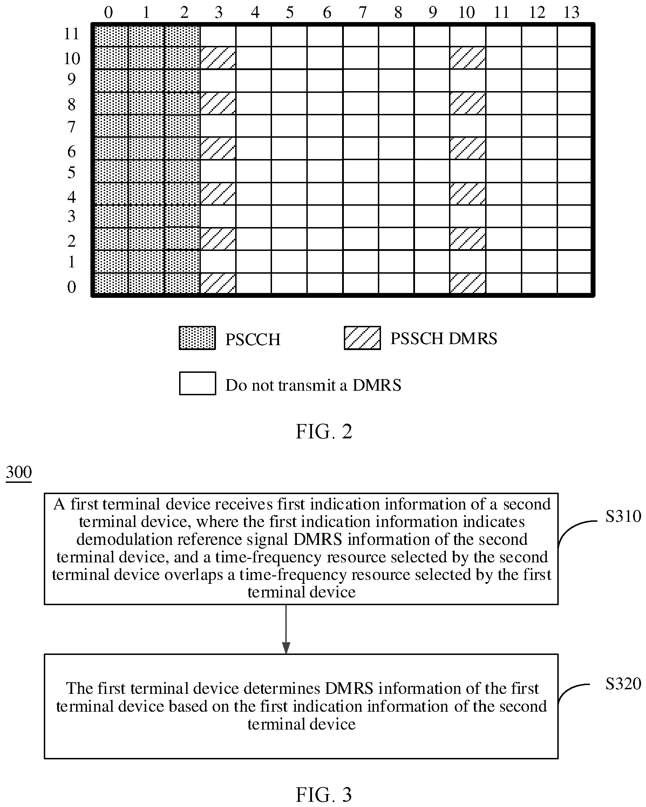

FIG. 2 is a schematic diagram of an OFDM time-frequency resource according to an embodiment of this application.

Refer to FIG. 2. For an orthogonal frequency division multiplexing (orthogonal frequency division multiplexing, OFDM) time-frequency resource, in a time domain dimension, it may be divided into a plurality of OFDM symbols, and each grid indicates one OFDM symbol; and in a frequency domain dimension, it may be divided into a plurality of subcarriers, and each grid indicates one subcarrier. One resource element (resource element, RE) refers to a time-frequency resource that occupies one OFDM symbol length in terms of time and occupies one subcarrier in terms of frequency. To be specific, one grid in FIG. 2 indicates one RE, and 12 REs may form one resource block (resource block, RB).

A number on a horizontal axis in FIG. 2 indicates an index of a symbol in a slot, and a number on a vertical axis indicates an index of a subcarrier in an RE. In addition, in these figures, an example in which one slot includes 14 symbols is used for description. In actual implementation, a quantity of symbols included in one slot may not be 14, for example, is 12. This case is also applicable to this application.

Currently, a PSSCH DMRS of an NR SL uses a single symbol configuration mode, and frequency domain density is 1/2. A PSSCH DMRS sequence uses a Gold sequence, and is initialized based on a cyclic redundancy check (cyclic redundancy check, CRC) of a physical sidelink control channel (physical sidelink control channel, PSCCH). Therefore, if PSCCHs of different terminal devices are not entirely the same, PSSCH DMRS sequences initialized and generated based on PSCCH CRCs of the different terminal devices are pseudo-orthogonal. For a same terminal device, a PSSCH DMRS sequence initialized and generated based on a PSCCH CRC is multiplied by a frequency domain orthogonal cover code (orthogonal cover code, OCC), so that two orthogonal DMRS ports may be obtained, where a frequency domain OCC of a port 1000 is [1, 1], and a frequency domain OCC of a port 1001 is [1, -1]. Specifically, a DMRS symbol that is mapped from a $p^{th}$ DMRS port to an $l^{th}$ symbol and a $k^{th}$ subcarrier is shown in Formula (1):

$$\alpha_{k,l}^{p} = w_f\left(k'\right)w_t\left(l'\right)r\left(2n+k'\right) \qquad (1)$$

$k = 4n + 2k' + \Delta$, $k' = 0,1$, $l = \overline{l} + l'$, $n = 0, 1, \cdots, \overline{l}$ is an offset of a current symbol relative to the $l^{th}$ symbol, $r(i)$ is an $i^{th}$ value of a DMRS sequence, values of $k'$, $l'$, and $\Delta$ and corresponding $w_f(k')$ and $w_t(l')$ are shown in Table 1, and $\lambda$ in the table indicates a code division multiplexing (code division multiplexing, CDM) group.

**Table 1**

| p | λ | Δ | $w_f(k')$ | | $w_t(l')$ | |
|---|---|---|---|---|---|---|
| | | | k' = 0 | k' = 1 | l' = 0 | l' = 1 |
| 1000 | 0 | 0 | +1 | +1 | +1 | +1 |
| 1001 | 0 | 0 | +1 | -1 | +1 | +1 |

Alternatively, the terminal device may include a DMRS port quantity indication field in sidelink control information (sidelink control information, SCI), namely, SCI 1, carried on the PSCCH. As shown in Table 2, when a value of the DMRS port quantity indication field is 0 (in other words, a DMRS port quantity is 1), the port 1000 is used; and when the value of the DMRS port quantity indication field is 1 (in other words, the DMRS port quantity is 2), the port 1000 and the port 1001 are used.

**Table 2**

| Value of the DMRS port quantity indication field | Antenna port |
|---|---|
| 0 | 1000 |
| 1 | 1000 and 1001 |

Therefore, conventional orthogonal DMRS ports can only be used for a same terminal device, but cannot be used for different terminal devices. For a scenario in which a quantity of ports of a terminal device is small, even if a plurality of orthogonal ports are available, DMRS ports of different terminal devices cannot be orthogonal. As a result, DMRS interference is high between terminal devices whose time-frequency resources overlap. Moreover, a channel estimation error may be large, and therefore reliable communication cannot be implemented.

This application provides a communication method, so that a possibility that DMRS ports of different terminal devices are orthogonal can be improved, to reduce DMRS interference between the terminal devices, so that channel estimation performance can be improved, and reliable communication can be implemented.

FIG. 3 is a schematic diagram of a communication method 300 according to an embodiment of this application. The method 300 may be performed by any terminal device in the terminal device 20 to the terminal device 40 in FIG. 1, or may be performed by a chip in the terminal device. The method 300 may include steps S310 to S320.

S310: A first terminal device receives first indication information of a second terminal device, where the first indication information indicates DMRS information of the second terminal device, and a time-frequency resource selected by the second terminal device overlaps a time-frequency resource selected by the first terminal device.

In this embodiment of this application, there may be one or more second terminal devices. This is not limited.

In this embodiment of this application, that a time-frequency resource selected by the second terminal device overlaps a time-frequency resource selected by the first terminal device may be understood as: The time-frequency resource selected by the second terminal device is entirely or partially the same as the time-frequency resource selected by the first terminal device. In some embodiments, because the time-frequency resource selected by the second terminal device overlaps the time-frequency resource selected by the first terminal device, the second terminal device may be referred to as a conflicting terminal device of the first terminal device, or the first terminal device may be referred to as a conflicting terminal device of the second terminal device.

S320: The first terminal device determines DMRS information of the first terminal device based on the first indication information of the second terminal device.

The DMRS information includes a DMRS sequence and/or a DMRS port.

In this embodiment of this application, the DMRS information of the second terminal device may include a DMRS sequence and/or a DMRS port of the second terminal device. The DMRS sequence of the second terminal device may be independently selected, or may be pre-configured. This is not limited.

In the solution provided in this application, the first terminal device may determine the DMRS information of the first terminal device based on the received first indication information indicating the DMRS information of the second terminal device. In other words, when determining the DMRS information of the first terminal device, the first terminal device may refer to the DMRS information of the second terminal device. In this way, a possibility of selecting a proper DMRS sequence and/or DMRS port can be improved, to reduce DMRS interference between terminal devices, so that channel estimation performance can be improved, and reliable communication can be implemented.

To facilitate understanding of the following solutions, this application first describes concepts such as DMRS port orthogonality, DMRS port pseudo-orthogonality, and same DMRS information. It is assumed that amplitude values of a symbol a, a symbol b, a symbol c, and a symbol d included in a DMRS sequence in the following are all the same.

DMRS port orthogonality: For example, a DMRS sequence of a terminal device 1 is [a, b], and an orthogonal cover code is [1, -1]; and a DMRS sequence of a terminal device 2 is [a, b], and an orthogonal cover code is [1, 1]. In this case, DMRS ports of the two terminal devices are orthogonal.

DMRS port pseudo-orthogonality: For example, a DMRS sequence of a terminal device 1 is [a, b], and an orthogonal cover code is [1, -1]; and a DMRS sequence of a terminal device 2 is [a, c], and an orthogonal cover code is [1, 1] or [1, -1] or [-1, 1] or [-1, -1]. In this case, DMRS ports of the two terminal devices are pseudo-orthogonal. It should be noted that, although amplitude values of the symbol b and the symbol c are the same, phases of the symbol b and the symbol c are different. Therefore, the DMRS port of the terminal device 1 is pseudo-orthogonal to the DMRS port of the terminal device 2 are.

Same DMRS information: For example, a DMRS sequence of a terminal device 1 is [a, b], and an orthogonal cover code is [1, -1]; and a DMRS sequence of a terminal device 2 is [a, b], and an orthogonal cover code is [1, -1]. In this case, DMRS information of the two terminal devices is the same.

It should be noted that, both the DMRS port orthogonality and the DMRS port pseudo-orthogonality described above may be understood as that DMRS information is different.

Optionally, in some embodiments, the DMRS port of the first terminal device is orthogonal to a DMRS port of at least one terminal device in the second terminal device.

In this embodiment of this application, when determining the DMRS port of the first terminal device, the first terminal device may select to be orthogonal to the DMRS port of the at least one terminal device in the second terminal device. If the second terminal device includes one terminal device, the DMRS port of the first terminal device may be orthogonal to a DMRS port of the one terminal device. If the second terminal device includes a plurality of terminal devices, the first terminal device may select to be orthogonal to a DMRS port of at least one terminal device in the plurality of terminal devices.

For example, it is assumed that a system includes five terminal devices: a terminal device 1, a terminal device 2, a terminal device 3, a terminal device 4, and a terminal device 5, and time-frequency resources of the five terminal devices overlap. By using an example in which the first terminal device is the terminal device 1, the terminal device 1 may determine DMRS information of the terminal device based on DMRS information of the remaining terminal devices. The following uses a quantity of different terminal devices included in the second terminal device as an example for detailed description.

Case 1: The second terminal device includes one terminal device.

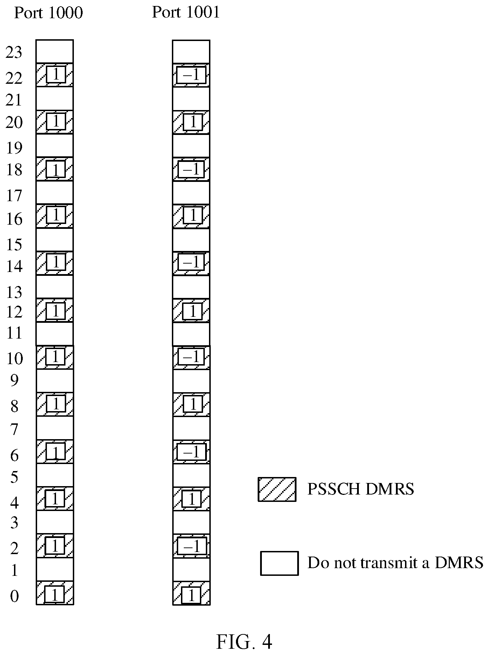

FIG. 4 is a schematic diagram of another OFDM time-frequency resource according to an embodiment of this application. A number in each grid indicates a desirable orthogonal cover code. If the second terminal device includes the terminal device 2, a DMRS sequence of the terminal device 2 is [a, b], and a used port is a port 1000, for example, a symbol a in the DMRS sequence of the terminal device 2 corresponds to a subcarrier 0 in the port 1000 (which may be understood as that the symbol a is mapped to the subcarrier 0 in the port 1000) and a symbol b corresponds to a subcarrier 2 in the port 1000, the terminal device 1 may select a port 1001, where the symbol a and the symbol b are separately mapped to a subcarrier 0 and a subcarrier 2 in the port 1001. In this case, because DMRS sequences of the two terminal devices are the same, an orthogonal cover code of the terminal device 1 is [1, 1], and an orthogonal cover code of the terminal device 2 is [1, -1], a DMRS port of the terminal device 1 and a DMRS port of the terminal device 2 are orthogonal.

Case 2: The second terminal device includes a plurality of terminal devices.

① If the second terminal device includes the terminal device 2 and the terminal device 3, DMRS sequences of the terminal device 2 and the terminal device 3 are both [a, b], and used ports are both a port 1000, for example, symbols a in the DMRS sequences of the terminal device 2 and the terminal device 3 correspond to a subcarrier 0 in the port 1000 and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, a DMRS port of the terminal device 1 is orthogonal to a DMRS port of the terminal device 2, and is also orthogonal to a DMRS port of the terminal device 3.

② If the second terminal device includes the terminal device 2 and the terminal device 3, a DMRS sequence of the terminal device 2 is [a, b], and a used port is a port 1000, for example, a symbol a in the DMRS sequence of the terminal device 2 corresponds to a subcarrier 0 in the port 1000 and a symbol b corresponds to a subcarrier 2 in the port 1000; and if a DMRS sequence of the terminal device 3 is [c, d] and a used port is also the port 1000, for example, a symbol c in the DMRS sequence of the terminal device 3 corresponds to the subcarrier 0 in the port 1000 and a symbol d corresponds to the subcarrier 2 in the port 1000, the terminal device 1 may select a port 1001, where the symbol a and the symbol b are separately mapped to a subcarrier 0 and a subcarrier 2 in the port 1001. In this case, because a DMRS sequence of the terminal device 1 is the same as the DMRS sequence of the terminal device 2, an orthogonal cover code of the terminal device 1 is [1, 1], and an orthogonal cover code of the terminal device 2 is [1, -1], a DMRS port of the terminal device 1 is orthogonal to a DMRS port of the terminal device 2; and because the DMRS sequence of the terminal device 1 is different from the DMRS sequence of the terminal device 3, the DMRS port of the terminal device 1 is pseudo-orthogonal to the DMRS port of the terminal device 3.

③ It is assumed that the second terminal device includes the terminal device 2 and the terminal device 3, DMRS sequences of the terminal device 2 and the terminal device 3 are both [a, b], a port used by the terminal device 2 is a port 1000, and a port used by the terminal device 3 is a port 1001, for example, a symbol a in the DMRS sequence of the terminal device 2 corresponds to a subcarrier 0 in the port 1000 and a symbol b corresponds to a subcarrier 2 in the port 1000; and a symbol a in the DMRS sequence of the terminal device 3 corresponds to a subcarrier 0 in the port 1001 and a symbol b corresponds to a subcarrier 2 in the port 1001. In this case, the terminal device 1 may select the port 1001 or the port 1000, and if a DMRS sequence selected by the terminal device 1 is also [a, b], regardless of which port the terminal device 1 selects, the terminal device 1 may be orthogonal to one of the terminal devices.

For example, the terminal device 1 selects the port 1001, and in this case, a DMRS port of the terminal device 1 is orthogonal to a DMRS port of the terminal device 2. For example, the terminal device 1 selects the port 1000, and in this case, the DMRS port of the terminal device 1 is orthogonal to a DMRS port of the terminal device 3.

Similarly, a case in which the second terminal device includes more terminal devices (for example, three or four) is similar to the case in which the second terminal device includes two terminal devices. For brevity, details are not described herein again.

It should be noted that, in an actual scenario, a quantity of second terminal devices whose time-frequency resources overlap the time-frequency resource selected by the first terminal device may be far greater than 5, for example, 50 or 100.

In the solution provided in this application, the DMRS port determined by the first terminal device is orthogonal to the DMRS port of the at least one terminal device in the second terminal device. Because the DMRS port determined by the first terminal device is orthogonal to the DMRS port of the at least one terminal device in the second terminal device, the DMRS interference between terminal devices can be reduced, so that the channel estimation performance can be improved, and the reliable communication can be implemented.

It is pointed out above that, the first terminal device may determine the DMRS information of the first terminal device based on the first indication information of the second terminal device. That the first terminal device determines the DMRS information of the first terminal device based on the first indication information of the second terminal device may include a plurality of manners. For details, refer to the following description.

Optionally, in some embodiments, that the first terminal device determines DMRS information of the first terminal device based on the first indication information of the second terminal device includes that

the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or

the DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device; or

the DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device; or

the DMRS information of the first terminal device determined by the first terminal device enables the DMRS information of the first terminal device to be different from the DMRS information of the second terminal device; or

the DMRS sequence of the first terminal device is initialized and generated based on a CRC of a first PSCCH of the first terminal device.

Manner 1:

The DMRS information of the first terminal device determined by the first terminal device enables the DMRS port of the first terminal device to be orthogonal to the DMRS port of the second terminal device.

In this embodiment of this application, it is still assumed that a system includes five terminal devices: a terminal device 1, a terminal device 2, a terminal device 3, a terminal device 4, and a terminal device 5. If the first terminal device is the terminal device 1, and the second terminal device includes the four terminal devices: the terminal device 2, the terminal device 3, the terminal device 4, and the terminal device 5, the DMRS port determined by the first terminal device may be orthogonal to all DMRS ports of the four terminal devices.

For example, refer to FIG. 4. If DMRS sequences of the four terminal devices: the terminal device 2, the terminal device 3, the terminal device 4, and the terminal device 5 are all [a, b] and used ports are all a port 1000, for example, symbols a in the DMRS sequences of the four terminal devices: the terminal device 2, the terminal device 3, the terminal device 4, and the terminal device 5 correspond to a subcarrier 0 in the port 1000; and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the four terminal devices: the terminal device 2, the terminal device 3, the terminal device 4, and the terminal device 5, an orthogonal cover code of the terminal device 1 is [1, -1], and orthogonal cover codes of the four terminal devices: the terminal device 2, the terminal device 3, the terminal device 4, and the terminal device 5 are [1, 1], a DMRS port of the terminal device 1 is orthogonal to a DMRS port of each of the four terminal devices: the terminal device 2, the terminal device 3, the terminal device 4, and the terminal device 5.

Manner 2:

The DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device.

An RSRP of the second terminal device in this embodiment of this application may be measured by the first terminal device. The RSRP may be a PSCCH RSRP, or may be a PSSCH RSRP. This is not limited.

In this embodiment of this application, it is assumed that a system includes five terminal devices: a terminal device 1, a terminal device 2, a terminal device 3, a terminal device 4, and a terminal device 5. If the first terminal device is the terminal device 1, the second terminal device includes the terminal device 2, the terminal device 3, the terminal device 4, and the terminal device 5, and RSRPs of the four terminal devices are sequentially -85 dBm, -65 dBm, -100 dBm, and - 75 dBm respectively; and if the first threshold is -90 dBm, terminal devices whose RSRPs are greater than the first threshold in the second terminal device include the terminal device 2, the terminal device 3, and the terminal device 5, in other words, the third terminal device includes the terminal device 2, the terminal device 3, and the terminal device 5. In this case, the DMRS port determined by the first terminal device may be orthogonal to all DMRS ports of the three terminal devices (namely, the terminal device 2, the terminal device 3, and terminal device 5).

For example, still refer to FIG. 4. If DMRS sequences of the three terminal devices: the terminal device 2, the terminal device 3, and the terminal device 5 are all [a, b] and used ports are all a port 1000, for example, symbols a in the DMRS sequences of the three terminal devices: the terminal device 2, the terminal device 3, and the terminal device 5 correspond to a subcarrier 0 in the port 1000; and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the three terminal devices: the terminal device 2, the terminal device 3, and the terminal device 5, an orthogonal cover code of the terminal device 1 is [1, -1], and orthogonal cover codes of the three terminal devices: the terminal device 2, the terminal device 3, and the terminal device 5 are [1, 1], a DMRS port of the terminal device 1 is orthogonal to a DMRS port of each of the three terminal devices: the terminal device 2, the terminal device 3, and the terminal device 5.

The first threshold in this embodiment of this application may be pre-configured, or may be specified in a protocol. This is not limited.

It should be noted that, in some embodiments, the third terminal device may include a terminal device whose RSRP is greater than or equal to the first threshold in the second terminal device.

Manner 3:

The DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device.

In this embodiment of this application, it is assumed that a system includes five terminal devices: a terminal device 1, a terminal device 2, a terminal device 3, a terminal device 4, and a terminal device 5. In Manner 2, the determined third terminal device includes the terminal device 2, the terminal device 3, and the terminal device 5. If a service priority relationship between the first terminal device and the third terminal device is that the terminal device 2 > the terminal device 3 > the terminal device 1 > the terminal device 5, because service priorities of the terminal device 2 and the terminal device 3 are greater than a service priority of the terminal device 1, the fourth terminal device in this application may include the terminal device 2 and the terminal device 3. In this case, the DMRS port determined by the first terminal device may be orthogonal to both the DMRS ports of the two terminal devices (namely, the terminal device 2 and terminal device 3).

For example, still refer to FIG. 4. If DMRS sequences of the two terminal devices: the terminal device 2 and the terminal device 3 are both [a, b] and used ports are both a port 1000, for example, symbols a in the DMRS sequences of the two terminal devices: the terminal device 2 and the terminal device 3 correspond to a subcarrier 0 in the port 1000; and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the two terminal devices: the terminal device 2 and the terminal device 3, an orthogonal cover code of the terminal device 1 is [1, -1], and orthogonal cover codes of the two terminal devices: the terminal device 2 and the terminal device 3 are [1, 1], a DMRS port of the terminal device 1 is orthogonal to a DMRS port of each of the two terminal devices: the terminal device 2 and the terminal device 3.

Manner 4:

The DMRS information of the first terminal device determined by the first terminal device enables the DMRS information of the first terminal device to be different from the DMRS information of the second terminal device.

In this embodiment of this application, it is assumed that a system includes five terminal devices: a terminal device 1, a terminal device 2, a terminal device 3, a terminal device 4, and a terminal device 5. The DMRS information determined by the first terminal device may be different from DMRS information of the four terminal devices.

It should be noted that, in this embodiment of this application, that the DMRS information of the first terminal device is different from the DMRS information of the second terminal device may be understood as: The DMRS port of the first terminal device is pseudo-orthogonal or orthogonal to the DMRS port of the second terminal device.

For example, if a DMRS sequence of the terminal device 2 may be [a, b], a DMRS sequence of the terminal device 3 may be [a, c], a DMRS sequence of the terminal device 4 may be [a, d], a DMRS sequence of the terminal device 5 may be [a, e], and used ports are all a port 1000, in this case, the terminal device 1 may select a port 1001, where symbols a and a symbol b are separately mapped to a subcarrier 0 and a subcarrier 2 in the port 1001. In this case, a DMRS port of the terminal device 1 is orthogonal to a DMRS port of the terminal device 2, and the DMRS port of the terminal device 1 is pseudo-orthogonal to all DMRS ports of the terminal device 3, the terminal device 4, and the terminal device 5. In other words, DMRS information determined by the terminal device 1 is different from DMRS information of the four terminal devices.

Manner 5:

The DMRS sequence of the first terminal device is initialized and generated based on a CRC of a first PSCCH of the first terminal device.

In this embodiment of this application, a DMRS sequence of the terminal device 1 may be initialized and generated based on a CRC of a first PSCCH of the terminal device 1. For example, if DMRS sequences of the terminal device 2 and the terminal device 3 are [a, b] and used ports may be a port 1000 and a port 1001 respectively, the terminal device 1 may initialize and generate the DMRS sequence of the terminal device 1 based on the CRC of the first PSCCH of the terminal device 1, for example, the initialized and generated sequence is [c, d]. In this case, regardless of which port the terminal device 1 selects, DMRS information of the terminal device 1 is different from DMRS information of the terminal device 2 and the terminal device 3.

In the solution provided in this application, the first terminal device may determine the DMRS information of the first terminal device in any of the foregoing manners, so that the DMRS port determined by the first terminal device is as orthogonal as possible to the DMRS port of the second terminal device, to improve the channel estimation performance and implement the reliable communication.

As described above, the first terminal device may determine the DMRS information of the first terminal device in any one of the foregoing five manners. Certainly, in some embodiments, the first terminal device may alternatively sort the foregoing five manners based on priorities, and determine the DMRS information of the first terminal device in a sorting order.

A sorting manner may be: Manner 1 > Manner 2 > Manner 3 > Manner 4 > Manner 5.

The following uses the foregoing sorting manner as an example for description.

For example, it is assumed that a system includes five terminal devices: a terminal device 1, a terminal device 2, a terminal device 3, a terminal device 4, and a terminal device 5. If the first terminal device is the terminal device 1, and the second terminal device includes the four terminal devices: the terminal device 2, the terminal device 3, the terminal device 4, and the terminal device 5, the DMRS port determined by the first terminal device is orthogonal to all DMRS ports of the four terminal devices, for example, the example shown in Manner 1.

However, in some embodiments, a DMRS port determined by the terminal device 1 cannot be orthogonal to all the DMRS ports of the four terminal devices. For example, if DMRS sequences of the three terminal devices: the terminal device 2, the terminal device 3, and the terminal device 5 are all [a, b] and used ports are all a port 1000, for example, symbols a in the DMRS sequences of the three terminal devices: the terminal device 2, the terminal device 3, and the terminal device 5 correspond to a subcarrier 0 in the port 1000; and symbols b correspond to a subcarrier 2 in the port 1000; and if a DMRS sequence of the terminal device 4 is [a, c] and a used port is the port 1000, in this case, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the three terminal devices: the terminal device 2, the terminal device 3, and the terminal device 5, an orthogonal cover code of the terminal device 1 is [1, -1], and orthogonal cover codes of the three terminal devices: the terminal device 2, the terminal device 3, and the terminal device 5 are [1, 1], the DMRS port of the terminal device 1 is orthogonal to the DMRS port of each of the three terminal devices: the terminal device 2, the terminal device 3, and the terminal device 5, but cannot be orthogonal to the DMRS port of the terminal device 4.

In this case, the terminal device 1 may determine, based on signal strength of terminal devices, that the terminal device 1 is orthogonal to some terminal devices. For example, if RSRPs of the four terminal devices: the terminal device 2, the terminal device 3, the terminal device 4, and the terminal device 5 are sequentially -85 dBm, -65 dBm, -100 dBm, and -75 dBm respectively; and if the first threshold is -90 dBm, the third terminal device includes the terminal device 2, the terminal device 3, and the terminal device 5. In this case, the DMRS port determined by the first terminal device may be orthogonal to all DMRS ports of the three terminal devices (namely, the terminal device 2, the terminal device 3, and terminal device 5).

However, in some embodiments, a DMRS port determined by the terminal device 1 cannot be orthogonal to all the DMRS ports of the three terminal devices (namely, the terminal device 2, the terminal device 3, and terminal device 5). For example, if DMRS sequences of the two terminal devices: the terminal device 2 and the terminal device 3 are both [a, b] and used ports are both a port 1000; and if a DMRS sequence of the terminal device 5 is [a, c] and a used port is the port 1000, in this case, the terminal device 1 may select a port 1001, where symbols a and symbols b are separately mapped to a subcarrier 0 and a subcarrier 2 in the port 1001. In this case, because a DMRS sequence of the terminal device 1 is the same as the DMRS sequences of the terminal device 2 and the terminal device 3, an orthogonal cover code of the terminal device 1 is [1, -1], and orthogonal cover codes of the two terminal devices: the terminal device 2 and the terminal device 3 are [1, 1], the DMRS port of the terminal device 1 is orthogonal to both the DMRS ports of the two terminal devices: the terminal device 2 and the terminal device 3, but cannot be orthogonal to the DMRS port of the terminal device 5.

In this case, the terminal device 1 may determine, based on service priorities of terminal devices, that the terminal device 1 is orthogonal to some terminal devices. For example, if a service priority relationship of the terminal devices in this case is that the terminal device 2 > the terminal device 3 > the terminal device 1 > the terminal device 5, because service priorities of the terminal device 2 and the terminal device 3 are greater than a service priority of the terminal device 1, in this case, the DMRS port determined by the first terminal device may be orthogonal to both the DMRS ports of the two terminal devices (namely, the terminal device 2 and terminal device 3).

However, in some embodiments, a DMRS port determined by the terminal device 1 cannot be orthogonal to both the DMRS ports of the two terminal devices (namely, the terminal device 2 and terminal device 3). For example, if a DMRS sequence of the terminal device 2 is [a, b] and a used port is a port 1000; and if a DMRS sequence of the terminal device 3 is [a, c] and a used port is the port 1000, in this case, the terminal device 1 may select a port 1001, where symbols a and a symbol b are separately mapped to a subcarrier 0 and a subcarrier 2 in the port 1001. In this case, because a DMRS sequence of the terminal device 1 is the same as the DMRS sequence of the terminal device 2, an orthogonal cover code of the terminal device 1 is [1, -1], and an orthogonal cover code of the terminal device 2 is [1, 1], the DMRS port of the terminal device 1 is orthogonal to the DMRS port of the terminal device 2, but cannot be orthogonal to the DMRS port of the terminal device 3.

In this case, DMRS information determined by the terminal device 1 may be different from DMRS information of the terminal device 2 and the terminal device 3. For example, if the DMRS sequence of the terminal device 2 may be [a, b] and the used port may be the port 1000; and the DMRS sequence of the terminal device 3 may be [a, c] and the used port may be the port 1000, in this case, the terminal device 1 may select the port 1001, where the symbols a and the symbol b are separately mapped to the subcarrier 0 and the subcarrier 2 in the port 1001. In this case, because the orthogonal cover code of the terminal device 1 is [1, -1], the orthogonal cover code of the terminal device 2 is [1, 1], and an orthogonal cover code of the terminal device 3 is [1, 1], the DMRS port of the terminal device 1 is orthogonal to the DMRS port of the terminal device 2, and the DMRS port of the terminal device 1 is pseudo-orthogonal to the DMRS port of the terminal device 3. In other words, in this case, the DMRS information of the terminal device 1 may be different from the DMRS information of the terminal device 2 and the terminal device 3.

However, in some embodiments, the DMRS information determined by the terminal device 1 may be the same as the DMRS information of the terminal device 2 and/or the terminal device 3. For example, if the DMRS sequences of the terminal device 2 and the terminal device 3 are [a, b] and the used ports may be the port 1000 and the port 1001 respectively, the DMRS sequence of the terminal device 1 may be [a, b] and a used port may be the port 1001. In this case, because the orthogonal cover code of the terminal device 1 is [1, -1], the orthogonal cover code of the terminal device 2 is [1, 1], and the orthogonal cover code of the terminal device 3 is [1, -1], the DMRS port of the terminal device 1 is orthogonal to the DMRS port of the terminal device 2, and the DMRS information of the terminal device 1 is the same as the DMRS information of the terminal device 3.

In this case, the DMRS sequence of the terminal device 1 may be initialized and generated based on a CRC of a first PSCCH of the terminal device 1. For example, if DMRS sequences of the terminal device 2 and the terminal device 3 are [a, b] and used ports may be a port 1000 and a port 1001 respectively, the terminal device 1 may initialize and generate the DMRS sequence of the terminal device 1 based on the CRC of the first PSCCH of the terminal device 1, for example, the initialized and generated sequence is [c, d]. In this case, regardless of which port the terminal device 1 selects, DMRS information of the terminal device 1 is different from DMRS information of the terminal device 2 and the terminal device 3.

In the solution provided in this application, the first terminal device may sequentially determine the DMRS information of the first terminal device based on the foregoing sorting. In this design, the DMRS port determined by the first terminal device may be preferentially as orthogonal as possible to the DMRS port of the second terminal device. If it cannot be met, the DMRS port determined by the first terminal device may be as orthogonal as possible to DMRS ports of some terminal devices in the second terminal device. If it cannot be met, the DMRS information determined by the first terminal device may be different from the DMRS information of the second terminal device. If it still cannot be met, the DMRS sequence of the first terminal device may be initialized and generated based on the CRC of the first PSCCH of the first terminal device. Based on this design, it may be preferentially ensured that the DMRS port of the first terminal device is orthogonal to the DMRS port of the second terminal device. If it cannot be ensured, the DMRS port of the first terminal device may be orthogonal to DMRS ports of some terminal devices in the second terminal device, or the DMRS information determined by the first terminal device may be different from the DMRS information of the second terminal device, to improve the channel estimation performance as much as possible, and implement the reliable communication.

In Manner 2, the DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device. In addition, the DMRS information of the first terminal device determined by the first terminal device may further meet another condition. For details, refer to the following description.

Case 1 of Manner 2:

The DMRS information of the first terminal device determined by the first terminal device enables the DMRS port of the first terminal device to be orthogonal to the DMRS port of the third terminal device, and enables the DMRS information of the first terminal device to be different from DMRS information of a device other than the third terminal device in the second terminal device.

As described above, it is assumed that a system includes five terminal devices: a terminal device 1, a terminal device 2, a terminal device 3, a terminal device 4, and a terminal device 5. If the first terminal device is the terminal device 1, the second terminal device includes the terminal device 2, the terminal device 3, the terminal device 4, and the terminal device 5, and RSRPs of the four terminal devices are sequentially -85 dBm, -65 dBm, -100 dBm, and -75 dBm respectively; and if the first threshold is -90 dBm, terminal devices whose RSRPs are greater than the first threshold in the second terminal device include the terminal device 2, the terminal device 3, and the terminal device 5, in other words, the third terminal device includes the terminal device 2, the terminal device 3, and the terminal device 5. In this case, in addition to that the DMRS port determined by the first terminal device is orthogonal to all DMRS ports of the three terminal devices (namely, the terminal device 2, the terminal device 3, and the terminal device 5), the DMRS information determined by the first terminal device may also be different from DMRS information of the terminal device 4.

For example, on a basis that it is ensured that a DMRS port of the terminal device 1 is orthogonal to all the DMRS ports of the three terminal devices: the terminal device 2, the terminal device 3, and the terminal device 5, if a DMRS sequence of the terminal device 4 is [a, b] and a used port may be a port 1000, in this case, the terminal device 1 may select a port 1001, where a symbol a and a symbol b are separately mapped to a subcarrier 0 and a subcarrier 2 in the port 1001; or the terminal device 1 may select the port 1000 or a port 1001, where a symbol a and a symbol c are separately mapped to a subcarrier 0 and a subcarrier 2 in the port 1000 or the port 1001. In this case, DMRS information of the terminal device 1 is different from the DMRS information of the terminal device 4.

Case 2 of Manner 2:

The DMRS information of the first terminal device determined by the first terminal device enables the DMRS port of the first terminal device to be orthogonal to the DMRS port of the third terminal device, and enables the DMRS information of the first terminal device to be different from DMRS information of a fifth terminal device, where the fifth terminal device includes a terminal device whose service priority is not lower than the service priority of the first terminal device and that is in the second terminal device.

As described above, it is assumed that a system includes five terminal devices: a terminal device 1, a terminal device 2, a terminal device 3, a terminal device 4, and a terminal device 5. If the first terminal device is the terminal device 1, the second terminal device includes the terminal device 2, the terminal device 3, the terminal device 4, and the terminal device 5, and RSRPs of the four terminal devices are sequentially -85 dBm, -65 dBm, -100 dBm, and -75 dBm respectively; and if the first threshold is -90 dBm, terminal devices whose RSRPs are greater than the first threshold in the second terminal device include the terminal device 2, the terminal device 3, and the terminal device 5, in other words, the third terminal device includes the terminal device 2, the terminal device 3, and the terminal device 5. In this case, in addition to that the DMRS port determined by the first terminal device is orthogonal to all DMRS ports of the three terminal devices (namely, the terminal device 2, the terminal device 3, and the terminal device 5), the DMRS information determined by the first terminal device may also be different from the DMRS information of the fifth terminal device (assuming that a service priority of the terminal device 4 is not lower than a service priority of the terminal device 1).

For example, on a basis that it is ensured that a DMRS port of the terminal device 1 is orthogonal to all the DMRS ports of the three terminal devices: the terminal device 2, the terminal device 3, and the terminal device 5, if a DMRS sequence of the terminal device 4 is [a, b] and a used port may be a port 1000, in this case, the terminal device 1 may select a port 1001, where a symbol a and a symbol b are separately mapped to a subcarrier 0 and a subcarrier 2 in the port 1001; or the terminal device 1 may select the port 1000 or a port 1001, where a symbol a and a symbol c are separately mapped to a subcarrier 0 and a subcarrier 2 in the port 1000 or the port 1001. In this case, DMRS information of the terminal device 1 is different from the DMRS information of the terminal device 4.

In the solution provided in this application, in addition to that the DMRS port determined by the first terminal device is orthogonal to the DMRS port of the third terminal device, the DMRS information determined by the first terminal device may be different from DMRS information of some devices in the second terminal device. The DMRS port determined by the first terminal device is orthogonal to the DMRS port of the third terminal device, and the DMRS information determined by the first terminal device is also different from DMRS information of another terminal device (for example, a device other than the third terminal device in the second terminal device, or a terminal device whose service priority is not lower than the service priority of the first terminal device and that is in the second terminal device), in other words, the DMRS information determined by the first terminal device is different from the DMRS information of the second terminal device, so that the channel estimation performance can be improved, and the reliable communication can be implemented.

In Manner 3, the DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device. In addition, the DMRS information of the first terminal device determined by the first terminal device may further meet another condition. For details, refer to the following description.

Case 1 of Manner 3:

The DMRS information of the first terminal device determined by the first terminal device enables the DMRS port of the first terminal device to be orthogonal to the DMRS port of the fourth terminal device, and enables the DMRS information of the first terminal device determined by the first terminal device to be different from DMRS information of a device other than the fourth terminal device in the third terminal device.

In this embodiment of this application, it is assumed that a system includes five terminal devices: a terminal device 1, a terminal device 2, a terminal device 3, a terminal device 4, and a terminal device 5. In Manner 2, the determined third terminal device includes the terminal device 2, the terminal device 3, and the terminal device 5. If a service priority relationship between the first terminal device and the third terminal device is that the terminal device 2 > the terminal device 3 > the terminal device 1 > the terminal device 5, because service priorities of the terminal device 2 and the terminal device 3 are greater than a service priority of the terminal device 1, the fourth terminal device in this application includes the terminal device 2 and the terminal device 3. In this case, in addition to that the DMRS port determined by the first terminal device is orthogonal to both DMRS ports of the two terminal devices (namely, the terminal device 2 and the terminal device 3), the DMRS information determined by the first terminal device may also be different from DMRS information of the terminal device 4 and the terminal device 5.

For example, on a basis that it is ensured that a DMRS port of the terminal device 1 is orthogonal to both the DMRS ports of the two terminal devices: the terminal device 2 and the terminal device 3, if a DMRS sequence of the terminal device 4 is [a, b] and a used port may be a port 1001; and if a DMRS sequence of the terminal device 5 is [a, c] and a used port is a port 1000, in this case, the terminal device 1 may select the port 1000, where symbols a and a symbol b are separately mapped to a subcarrier 0 and a subcarrier 2 in the port 1000. In this case, DMRS information of the terminal device 1 is different from the DMRS information of the terminal device 4 and the terminal device 5.

Case 2 of Manner 3:

The DMRS information of the first terminal device determined by the first terminal device enables the DMRS port of the first terminal device to be orthogonal to the DMRS port of the fourth terminal device, and enables the DMRS information of the first terminal device to be different from the DMRS information of the fifth terminal device, where the fifth terminal device includes a terminal device whose service priority is not lower than the service priority of the first terminal device and that is in the second terminal device.

In this embodiment of this application, it is assumed that a system includes five terminal devices: a terminal device 1, a terminal device 2, a terminal device 3, a terminal device 4, and a terminal device 5. In Manner 2, the determined third terminal device includes the terminal device 2, the terminal device 3, and the terminal device 5. If a service priority relationship between the first terminal device and the third terminal device is that the terminal device 2 > the terminal device 3 > the terminal device 1 > the terminal device 5, because service priorities of the terminal device 2 and the terminal device 3 are greater than a service priority of the terminal device 1, the fourth terminal device in this application includes the terminal device 2 and the terminal device 3. In this case, in addition to that the DMRS port determined by the first terminal device is orthogonal to both DMRS ports of the two terminal devices (namely, the terminal device 2 and the terminal device 3), the DMRS information determined by the first terminal device may also be different from the DMRS information of the fifth terminal device (assuming that service priorities of the terminal device 4 and the terminal device 5 are not lower than a service priority of the terminal device 1).

For example, on a basis that it is ensured that a DMRS port of the terminal device 1 is orthogonal to both the DMRS ports of the two terminal devices: the terminal device 2 and the terminal device 3, if a DMRS sequence of the terminal device 4 is [a, b] and a used port may be a port 1001; and if a DMRS sequence of the terminal device 5 is [a, c] and a used port is a port 1000, in this case, the terminal device 1 may select the port 1000, where symbols a and a symbol b are separately mapped to a subcarrier 0 and a subcarrier 2 in the port 1000. In this case, DMRS information of the terminal device 1 is different from the DMRS information of the terminal device 4 and the terminal device 5.

In the solution provided in this application, in addition to that the DMRS port determined by the first terminal device is orthogonal to the DMRS port of the fourth terminal device, the DMRS information determined by the first terminal device may also be different from DMRS information of some devices in the third terminal device. The DMRS port determined by the first terminal device is orthogonal to the DMRS port of the fourth terminal device, and the DMRS information determined by the first terminal device is also different from DMRS information of another terminal device (for example, a device other than the fourth terminal device in the third terminal device, or a terminal device whose service priority is not lower than the service priority of the first terminal device and that is in the second terminal device), in other words, the DMRS information determined by the first terminal device is different from the DMRS information of the third terminal device or the second terminal device, so that the channel estimation performance can be improved, and the reliable communication can be implemented.

In addition, in some embodiments, the first terminal device may alternatively determine the DMRS information of the first terminal device in the following manner. For details, refer to the following description.

That the first terminal device determines DMRS information of the first terminal device based on the first indication information of the second terminal device includes that

the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or

the DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device; or

the DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device; or

the DMRS information of the first terminal device determined by the first terminal device enables the DMRS information of the first terminal device to be different from the DMRS information of the second terminal device; or

the DMRS sequence of the first terminal device is initialized and generated based on a cyclic redundancy check CRC of a first physical sidelink control channel PSCCH of the first terminal device.

Manner 1:

The DMRS information of the first terminal device determined by the first terminal device enables the DMRS port of the first terminal device to be orthogonal to the DMRS port of the second terminal device.

For Manner 1, refer to the foregoing content. Details are not described herein again.

Manner 6:

The DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device.

In this embodiment of this application, it is assumed that a system includes five terminal devices: a terminal device 1, a terminal device 2, a terminal device 3, a terminal device 4, and a terminal device 5. If the first terminal device is the terminal device 1, the second terminal device includes: the terminal device 2, the terminal device 3, the terminal device 4, and the terminal device 5, and a service priority relationship is that the terminal device 2 > the terminal device 3 > the terminal device 5 > the terminal device 1 > the terminal device 4, because service priorities of the terminal device 2, the terminal device 3, and the terminal device 5 are greater than a service priority of the terminal device 1, the fifth terminal device in this application includes the terminal device 2, the terminal device 3, and the terminal device 5. In this case, the DMRS port determined by the first terminal device may be orthogonal to all DMRS ports of the three terminal devices (namely, the terminal device 2, the terminal device 3, and terminal device 5).

For example, still refer to FIG. 4. If DMRS sequences of the three terminal devices: the terminal device 2, the terminal device 3, and the terminal device 5 are all [a, b] and used ports are all a port 1000, for example, symbols a in the DMRS sequences of the three terminal devices: the terminal device 2, the terminal device 3, and the terminal device 5 correspond to a subcarrier 0 in the port 1000; and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the three terminal devices: the terminal device 2, the terminal device 3, and the terminal device 5, an orthogonal cover code of the terminal device 1 is [1, -1], and orthogonal cover codes of the three terminal devices: the terminal device 2, the terminal device 3, and the terminal device 5 are [1, 1], a DMRS port of the terminal device 1 is orthogonal to a DMRS port of each of the three terminal devices: the terminal device 2, the terminal device 3, and the terminal device 5.

Manner 7:

The DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device.

In this embodiment of this application, it is assumed that a system includes five terminal devices: a terminal device 1, a terminal device 2, a terminal device 3, a terminal device 4, and a terminal device 5. In Manner 6, the determined fifth terminal device includes the terminal device 2, the terminal device 3, and the terminal device 5. If RSRPs of the three terminal devices are -85 dBm, -65 dBm, and -100 dBm respectively; and if the first threshold is -90 dBm, terminal devices whose RSRPs are greater than the first threshold in the fifth terminal device include the terminal device 2 and the terminal device 3, in other words, the sixth terminal device includes the terminal device 2 and the terminal device 3. In this case, the DMRS port determined by the first terminal device may be orthogonal to both DMRS ports of the two terminal devices (namely, the terminal device 2 and terminal device 3).

For example, still refer to FIG. 4. If DMRS sequences of the two terminal devices: the terminal device 2 and the terminal device 3 are both [a, b] and used ports are both a port 1000, for example, symbols a in the DMRS sequences of the two terminal devices: the terminal device 2 and the terminal device 3 correspond to a subcarrier 0 in the port 1000; and symbols b correspond to a subcarrier 2 in the port 1000, the terminal device 1 may select a port 1001, where the symbols a and the symbols b are separately mapped to a subcarrier 0 and a subcarrier 2 in the port 1001. In this case, because a DMRS sequence of the terminal device 1 is the same as the DMRS sequences of the two terminal devices: the terminal device 2 and the terminal device 3, an orthogonal cover code of the terminal device 1 is [1, -1], and orthogonal cover codes of the two terminal devices: the terminal device 2 and the terminal device 3 are [1, 1], a DMRS port of the terminal device 1 is orthogonal to a DMRS port of each of the two terminal devices: the terminal device 2 and the terminal device 3.

Manner 4:

The DMRS information of the first terminal device determined by the first terminal device enables the DMRS information of the first terminal device to be different from the DMRS information of the second terminal device.

Manner 5:

The DMRS sequence of the first terminal device is initialized and generated based on a cyclic redundancy check CRC of a first physical sidelink control channel PSCCH of the first terminal device.

For Manner 4 and Manner 5, refer to the foregoing content. Details are not described herein again.

As described above, the first terminal device may determine the DMRS information of the first terminal device in any one of the foregoing five manners. Certainly, in some embodiments, the first terminal device may alternatively sort the foregoing five manners based on priorities, and determine the DMRS information of the first terminal device in a sorting order.

A sorting manner may be: Manner 1 > Manner 6 > Manner 7 > Manner 4 > Manner 5.

A specific implementation process is similar to the sorting manner in the foregoing embodiment. For brevity, details are not described herein again.

In the solution provided in this application, the first terminal device may sequentially determine the DMRS information of the first terminal device based on the foregoing sorting. In this design, the DMRS port determined by the first terminal device may be preferentially as orthogonal as possible to the DMRS port of the second terminal device. If it cannot be met, the DMRS port determined by the first terminal device may be as orthogonal as possible to DMRS ports of some terminal devices in the second terminal device. If it cannot be met, the DMRS information determined by the first terminal device may be different from the DMRS information of the second terminal device. If it still cannot be met, the DMRS sequence of the first terminal device may be initialized and generated based on the CRC of the first PSCCH of the first terminal device. Based on this design, it may be preferentially ensured that the DMRS port of the first terminal device is orthogonal to the DMRS port of the second terminal device. If it cannot be ensured, the DMRS port of the first terminal device may be orthogonal to DMRS ports of some terminal devices in the second terminal device, or the DMRS information determined by the first terminal device may be different from the DMRS information of the second terminal device, to improve the channel estimation performance as much as possible, and implement the reliable communication.

In Manner 6, the DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device. In addition, the DMRS information of the first terminal device determined by the first terminal device may further meet another condition. For details, refer to the following description.

Case 1 of Manner 6:

The DMRS information of the first terminal device determined by the first terminal device enables the DMRS port of the first terminal device to be orthogonal to the DMRS port of the fifth terminal device, and enables the DMRS information of the first terminal device to be different from DMRS information of a device other than the fifth terminal device in the second terminal device.

It is assumed that a system includes five terminal devices: a terminal device 1, a terminal device 2, a terminal device 3, a terminal device 4, and a terminal device 5. If the first terminal device is the terminal device 1, the second terminal device includes: the terminal device 2, the terminal device 3, the terminal device 4, and the terminal device 5, and a service priority relationship is that the terminal device 2 > the terminal device 3 > the terminal device 5 > the terminal device 1 > the terminal device 4, because service priorities of the terminal device 2, the terminal device 3, and the terminal device 5 are greater than a service priority of the terminal device 1, the fifth terminal device in this application includes the terminal device 2, the terminal device 3, and the terminal device 5. In this case, in addition to that the DMRS port determined by the first terminal device is orthogonal to all DMRS ports of the three terminal devices (namely, the terminal device 2, the terminal device 3, and the terminal device 5), the DMRS information of the first terminal device may also be different from DMRS information of the terminal device 4.

For example, on a basis that it is ensured that a DMRS port of the terminal device 1 is orthogonal to all the DMRS ports of the three terminal devices: the terminal device 2, the terminal device 3, and the terminal device 5, if a DMRS sequence of the terminal device 4 is [a, b] and a used port may be a port 1000, in this case, the terminal device 1 may select a port 1001, where a symbol a and a symbol b are separately mapped to a subcarrier 0 and a subcarrier 2 in the port 1001; or the terminal device 1 may select the port 1000 or a port 1001, where a symbol a and a symbol c are separately mapped to a subcarrier 0 and a subcarrier 2 in the port 1000 or the port 1001. In this case, DMRS information of the terminal device 1 is different from the DMRS information of the terminal device 4.

Case 2 of Manner 6:

The DMRS information of the first terminal device determined by the first terminal device enables the DMRS port of the first terminal device to be orthogonal to the DMRS port of the fifth terminal device, and enables the DMRS information of the first terminal device to be different from the DMRS information of the third terminal device, where the third terminal device includes a terminal device whose RSRP is greater than the first threshold in the second terminal device.

It is assumed that a system includes five terminal devices: a terminal device 1, a terminal device 2, a terminal device 3, a terminal device 4, and a terminal device 5. If the first terminal device is the terminal device 1, the second terminal device includes: the terminal device 2, the terminal device 3, the terminal device 4, and the terminal device 5, and a service priority relationship is that the terminal device 2 > the terminal device 3 > the terminal device 5 > the terminal device 1 > the terminal device 4, because service priorities of the terminal device 2, the terminal device 3, and the terminal device 5 are greater than a service priority of the terminal device 1, the fifth terminal device in this application includes the terminal device 2, the terminal device 3, and the terminal device 5. In this case, in addition to that the DMRS port determined by the first terminal device is orthogonal to all DMRS ports of the three terminal devices (namely, the terminal device 2, the terminal device 3, and the terminal device 5), the DMRS information of the first terminal device may also be different from the DMRS information of the third terminal device (assuming that an RSRP of the terminal device 4 is greater than an RSRP of the terminal device 1).

For example, on a basis that it is ensured that a DMRS port of the terminal device 1 is orthogonal to all the DMRS ports of the three terminal devices: the terminal device 2, the terminal device 3, and the terminal device 5, if a DMRS sequence of the terminal device 4 is [a, b] and a used port may be a port 1000, in this case, the terminal device 1 may select a port 1001, where a symbol a and a symbol b are separately mapped to a subcarrier 0 and a subcarrier 2 in the port 1001; or the terminal device 1 may select the port 1000 or a port 1001, where a symbol a and a symbol c are separately mapped to a subcarrier 0 and a subcarrier 2 in the port 1000 or the port 1001. In this case, DMRS information of the terminal device 1 is different from the DMRS information of the terminal device 4.

In the solution provided in this application, in addition to that the DMRS port determined by the first terminal device is orthogonal to the DMRS port of the fifth terminal device, the DMRS information determined by the first terminal device may also be different from DMRS information of some devices in the fifth terminal device. The DMRS port determined by the first terminal device is orthogonal to the DMRS port of the fifth terminal device, and the DMRS information determined by the first terminal device is also different from DMRS information of another terminal device (for example, a device other than the fifth terminal device in the second terminal device, or a terminal device whose RSRP is greater than the first threshold in the second terminal device), in other words, the DMRS information determined by the first terminal device is different from the DMRS information of the second terminal device, so that the channel estimation performance can be improved, and the reliable communication can be implemented.

In Manner 7, the DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device. In addition, the DMRS information of the first terminal device determined by the first terminal device may further meet another condition. For details, refer to the following description.

Case 1 of Manner 7:

The DMRS information of the first terminal device determined by the first terminal device enables the DMRS port of the first terminal device to be orthogonal to the DMRS port of the sixth terminal device, and enables the DMRS information of the first terminal device to be different from DMRS information of a device other than the sixth terminal device in the fifth terminal device.

In this embodiment of this application, it is assumed that a system includes five terminal devices: a terminal device 1, a terminal device 2, a terminal device 3, a terminal device 4, and a terminal device 5. In Manner 6, the determined fifth terminal device includes the terminal device 2, the terminal device 3, and the terminal device 5. If RSRPs of the three terminal devices are -85 dBm, -65 dBm, and -100 dBm respectively; and if the first threshold is -90 dBm, terminal devices whose RSRPs are greater than the first threshold in the fifth terminal device include the terminal device 2 and the terminal device 3, in other words, the sixth terminal device includes the terminal device 2 and the terminal device 3. In this case, in addition to that the DMRS port determined by the first terminal device is orthogonal to both DMRS ports of the two terminal devices (namely, the terminal device 2 and the terminal device 3), the DMRS information determined by the first terminal device may also be different from DMRS information of the terminal device 5.

For example, on a basis that it is ensured that a DMRS port of the terminal device 1 is orthogonal to both the DMRS ports of the two terminal devices: the terminal device 2 and the terminal device 3, if a DMRS sequence of the terminal device 5 may be [a, c] and a used port may be a port 1000, in this case, the terminal device 1 may select the port 1000, where a symbol a and a symbol b are separately mapped to a subcarrier 0 and a subcarrier 2 in the port 1000. In this case, DMRS information of the terminal device 1 is different from the DMRS information of the terminal device 5.

Case 2 of Manner 7:

The DMRS information of the first terminal device determined by the first terminal device enables the DMRS port of the first terminal device to be orthogonal to the DMRS port of the sixth terminal device, and enables the DMRS information of the first terminal device to be different from the DMRS information of the fifth terminal device.

In this embodiment of this application, it is assumed that a system includes five terminal devices: a terminal device 1, a terminal device 2, a terminal device 3, a terminal device 4, and a terminal device 5. In Manner 6, the determined fifth terminal device includes the terminal device 2, the terminal device 3, and the terminal device 5. If RSRPs of the three terminal devices are -85 dBm, -65 dBm, and -100 dBm respectively; and if the first threshold is -90 dBm, terminal devices whose RSRPs are greater than the first threshold in the fifth terminal device include the terminal device 2 and the terminal device 3, in other words, the sixth terminal device includes the terminal device 2 and the terminal device 3. In this case, in addition to that the DMRS port determined by the first terminal device is orthogonal to both DMRS ports of the two terminal devices (namely, the terminal device 2 and the terminal device 3), the DMRS information determined by the first terminal device may also be different from DMRS information of the terminal device 5.

For example, on a basis that it is ensured that a DMRS port of the terminal device 1 is orthogonal to both the DMRS ports of the two terminal devices: the terminal device 2 and the terminal device 3, if a DMRS sequence of the terminal device 5 may be [a, c] and a used port may be a port 1000, in this case, the terminal device 1 may select the port 1000, where a symbol a and a symbol b are separately mapped to a subcarrier 0 and a subcarrier 2 in the port 1000. In this case, DMRS information of the terminal device 1 is different from the DMRS information of the terminal device 5.

In the solution provided in this application, in addition to that the DMRS port determined by the first terminal device is orthogonal to the DMRS port of the sixth terminal device, the DMRS information determined by the first terminal device may also be different from DMRS information of some devices in the sixth terminal device. The DMRS port determined by the first terminal device is orthogonal to the DMRS port of the sixth terminal device, and the DMRS information determined by the first terminal device is also different from DMRS information of another terminal device (for example, a device other than the sixth terminal device in the fifth terminal device, or the fifth terminal device), in other words, the DMRS information determined by the first terminal device is different from the DMRS information of the fifth terminal device, so that the channel estimation performance can be improved, and the reliable communication can be implemented.

The foregoing describes a plurality of manners in which the first terminal device determines the DMRS information of the first terminal device. The DMRS information includes the DMRS sequence and the DMRS port. For related content about the DMRS sequence, refer to the following description.

Optionally, in some embodiments, the method 300 further includes the following step.

The first terminal device generates k initialized sequences based on second indication information, where each sequence in the k initialized sequences is for generating one DMRS sequence, and k is an integer greater than or equal to 1.

That the first terminal device determines DMRS information of the first terminal device based on the first indication information of the second terminal device includes that
the first terminal device selects, based on the first indication information of the second terminal device, an initialized sequence from the k initialized sequences to generate a DMRS sequence, where a DMRS sequence of the first terminal device belongs to DMRS sequences generated by using the k initialized sequences.

In this embodiment of this application, the first terminal device may generate the k initialized sequences based on an indication of the second indication information. In this case, the first terminal device may select a proper sequence from the k initialized sequences to generate the DMRS sequence based on the first indication information indicating the DMRS information of the second terminal device.

It may be understood that, the DMRS sequence generated based on the initialized sequences in this embodiment of this application may be the sequence [a, b], [a, c], [c, d], or the like in the foregoing embodiments. This is not limited.

Optionally, in some embodiments, the second indication information is pre-configuration information of the first terminal device; or

the second indication information is indication information sent by a network device; or
the second indication information is indication information sent by another terminal device other than the first terminal device.

In this embodiment of this application, the second indication information obtained by the first terminal device may be the pre-configuration information of the first terminal device, or may be information configured by a network device for the first terminal device, or may be information configured by the first terminal device for the first terminal device. Alternatively, the second indication information may be indication information sent by a network device or another terminal device, where the indication information may be sent when the first terminal device determines the DMRS information, or may be sent before the first terminal device determines the DMRS information. This is not limited.

In the solution provided in this application, the first terminal device may generate the k initialized sequences based on an indication of the second indication information, and select a proper sequence from the k initialized sequences to generate the DMRS sequence based on the first indication information indicating the DMRS information of the second terminal device. The DMRS sequence determined by the first terminal device is generated based on an initialized sequence selected from the k initialized sequences, in other words, the first terminal device selects different initialized sequences to generate different DMRS sequences, so that diversity of DMRS sequences determined by the first terminal device can be increased, to minimize a possibility that the DMRS information of the first terminal device is the same as that of another terminal device. Moreover, the channel estimation performance can be improved, and the reliable communication can be implemented.

Optionally, in some embodiments, the second indication information indicates at least one piece of the following information: an initial group identity (group identity, GID), a quantity k of initialized sequences, and a step size $\omega$; and

that the first terminal device generates k initialized sequences based on second indication information includes that

the first terminal device generates the k initialized sequences based on the following formula:

$$VID_i = GID + i * \varpi,$$

where i is a positive integer not greater than k.

*VID* may also be referred to as a virtual identity (virtual identity, VID).

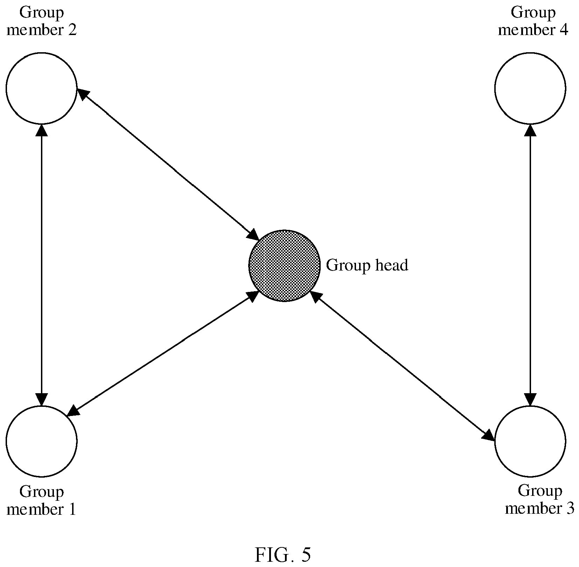

FIG. 5 is a schematic diagram of a group-based communication manner according to an embodiment of this application. Refer to FIG. 5. It is assumed that the first terminal device is a group member 1 in FIG. 5, and the second terminal device includes a group member 2, a group member 3, and a group member 4 in FIG. 5. A group head may send the second indication information to the group member 1, and the group member 1 may generate k initialized sequences based on the information indicated by the second indication information. Certainly, the group head may also send the second indication information to other group members (for example, the group member 2, the group member 3, and the group member 4), and the three group members may generate k initialized sequences based on the information indicated by the second indication. Because the information indicated by the second indication information is the same, the k initialized sequences generated by the group member 1 and the k initialized sequences generated by the three group members (including the group member 2, the group member 3, and the group member 4) are also the same.

In the solution provided in this application, the first terminal device may generate the k initialized sequences based on the foregoing formula, and the first terminal device may select a proper initialized sequence from the k initialized sequences to generate the DMRS sequence. The DMRS sequence determined by the first terminal device is generated based on an initialized sequence selected from the k initialized sequences, in other words, the first terminal device selects different initialized sequences to generate different DMRS sequences, so that diversity of DMRS sequences determined by the first terminal device can be increased, to minimize a possibility that the DMRS information of the first terminal device is the same as that of another terminal device. Moreover, the channel estimation performance can be improved, and the reliable communication can be implemented.

That the first terminal device may enable the determined DMRS port to be as orthogonal as possible to the DMRS port of the second terminal device in a plurality of manners is described above. How the first terminal device increases a port to enable the determined DMRS port to be as orthogonal as possible to the DMRS port of the second terminal device is described below. For details, refer to the following description.

Optionally, in some embodiments, the method 300 may further include the following step.

The first terminal device increases preset ports selectable by the first terminal device by introducing a DMRS port of 1/4 hybrid frequency domain density, where the preset ports include the DMRS port included in the DMRS information of the first terminal device determined by the first terminal device, and the DMRS port of 1/4 hybrid frequency domain density is orthogonal to a DMRS port of 1/2 hybrid frequency domain density.

For the preset ports selectable by the first terminal device in this embodiment of this application, port increasing may be implemented by introducing the DMRS port of 1/4 hybrid frequency domain density. In the foregoing embodiments, the port 1000 and the port 1001 are used as examples to describe how the first terminal device determines the DMRS information of the first terminal device. In this embodiment of this application, by introducing the DMRS port of 1/4 hybrid frequency domain density, the preset ports may include four ports, including: the port 1000, the port 1001, a port 1002, and a port 1003.

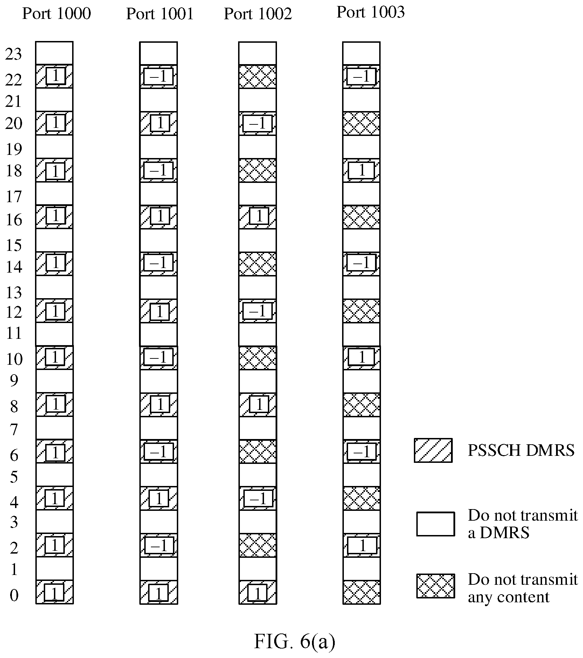

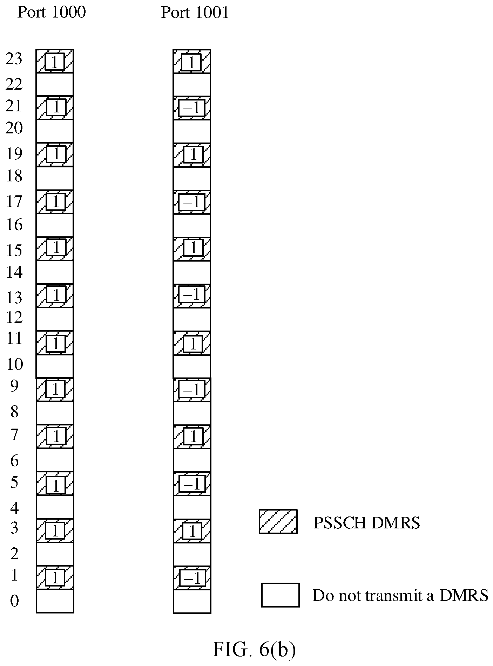

FIG. 6(a) and FIG. 6(b) are a schematic diagram of still another OFDM time-frequency resource according to an embodiment of this application. Refer to FIG. 6(a). The port 1000 and the port 1001 are DMRS ports of 1/2 hybrid frequency domain density; and the port 1002 and the port 1003 are DMRS ports of 1/4 hybrid frequency domain density. For example, the port 1000 and the port 1001 may be orthogonal to each other by using a frequency domain OCC. (for example, a subcarrier 0 and a subcarrier 2 form a group), the port 1000 and the port 1002 may be orthogonal to each other by using a frequency domain OCC (for example, a subcarrier 0 and a subcarrier 4 form a group), the port 1000 and the port 1003 may be orthogonal to each other by using a frequency domain OCC (for example, a subcarrier 2 and a subcarrier 6 form a group), the port 1001 and the port 1002 may be orthogonal to each other by using a frequency domain OCC (for example, a subcarrier 0 and a subcarrier 4 form a group), the port 1001 and the port 1003 may be orthogonal to each other by using a frequency domain OCC (for example, a subcarrier 2 and a subcarrier 6 form a group), and the port 1002 and the port 1003 may be orthogonal to each other through frequency division multiplexing.

For the foregoing hybrid frequency domain density solution, a DMRS symbol that is mapped from a $p^{th}$ DMRS port to an $l^{th}$ symbol and a $k^{th}$ subcarrier may also be shown in Formula (1).

If a DMRS port of 1/2 hybrid frequency domain density is used, $k = 4n + 2k' + \Delta$. If a DMRS port of 1/4 hybrid frequency domain density is used, $k = 8n + 4k' + \Delta$. Values of $k'$, $l'$, and $\Delta$ and corresponding $w_f(k')$ and $w_t(l')$ are shown in Table 3.

**Table 3**

| $p$ | $\lambda$ | $\Delta$ | $w_f(k')$ | | $w_t(l')$ | |
|---|---|---|---|---|---|---|
| | | | $k'=0$ | $k'=1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 0 | +1 | -1 | +1 | +1 |
| 1003 | 1 | 2 | +1 | -1 | +1 | +1 |

Alternatively, the terminal device may include a DMRS port quantity indication field in sidelink control information (sidelink control information, SCI), namely, SCI 1, carried on the PSCCH. As shown in Table 4, when a value of the DMRS port quantity indication field is 0 (in other words, a DMRS port quantity is 1), any one of the port 1000 to the port 1003 is used; and when the value of the DMRS port quantity indication field is 1 (in other words, the DMRS port quantity is 2), any two of the port 1000 to the port 1003 are used.

**Table 4**

| Value of the DMRS port quantity indication field | DMRS port selection indication | Antenna port |
|---|---|---|
| 0 | 00 | 1000 |
| | 01 | 1001 |
| | 10 | 1002 |
| | 11 | 1003 |
| 1 | 000 | 1000 and 1001 |
| | 001 | 1000 and 1002 |
| | 010 | 1000 and 1003 |
| | 011 | 1001 and 1002 |
| | 100 | 1001 and 1003 |
| | 101 | 1002 and 1003 |

In Manner 3, the DMRS port of the terminal device 1 is orthogonal to the DMRS port of each of the two terminal devices: the terminal device 2 and the terminal device 3. However, because DMRS information of the two terminal devices: the terminal device 2 and the terminal device 3, is the same, a DMRS between the two terminal devices is interfered. As a result, channel estimation is poor, and system performance is affected.

In this embodiment of this application, it is still assumed that a system includes five terminal devices: a terminal device 1, a terminal device 2, a terminal device 3, a terminal device 4, and a terminal device 5. If the first terminal device is the terminal device 1 and the second terminal device includes the two terminal devices: the terminal device 2 and the terminal device 3, on a basis of DMRS port increasing, a DMRS port determined by the first terminal device may be orthogonal to both DMRS ports of the two terminal devices, and the DMRS ports of the two terminal devices are orthogonal to each other.

Refer to FIG. 6(a). It is assumed that a DMRS sequence of the terminal device 2 is [a, b, c, d] and a used port is the port 1000, for example, a symbol a in the DMRS sequence of the terminal device 2 corresponds to a subcarrier 0 in the port 1000, a symbol b corresponds to a subcarrier 2 in the port 1000, a symbol c corresponds to a subcarrier 4 in the port 1000, and a symbol d corresponds to a subcarrier 6 in the port 1000; and a DMRS sequence of the terminal device 3 is [a, b, c, d] and a used port is the port 1001, for example, a symbol a in the DMRS sequence of the terminal device 3 corresponds to a subcarrier 0 in the port 1001, a symbol b corresponds to a subcarrier 2 in the port 1001, a symbol c corresponds to a subcarrier 4 in the port 1001, and a symbol d corresponds to a subcarrier 6 in the port 1001. In this case, the port 1000 and the port 1001 may be orthogonal to each other by using a frequency domain 2 OCC (for example, the subcarrier 0 and the subcarrier 2 form a group, and the subcarrier 4 and the subcarrier 6 form a group.), in other words, the DMRS port of the terminal device 2 and the DMRS port of the terminal device 3 are orthogonal to each other.

In this case, the terminal device 1 may select the port 1002 or the port 1003, to enable a DMRS port of the terminal device 1 to be orthogonal to both the DMRS ports of the terminal device 2 and the terminal device 3. The terminal device 1 may select the DMRS sequence as [a, c] and a selected port as the port 1002. For example, a symbol a in the DMRS sequence of the terminal device 1 corresponds to a subcarrier 0 in the port 1002, and a symbol c corresponds to a subcarrier 4 in the port 1002. Alternatively, the DMRS sequence selected by the terminal device 1 may be [b, d] and the selected port is the port 1003. For example, a symbol b in the DMRS sequence of the terminal device 1 corresponds to a subcarrier 2 in the port 1003, and a symbol d corresponds to a subcarrier 6 in the port 1003.

If the terminal device 1 selects the port 1002, in this case, the port 1002 and the port 1000 may be orthogonal to each other by using a frequency domain 2 OCC (for example, the subcarrier 0 and the subcarrier 4 form a group), and the port 1002 and the port 1001 may be orthogonal to each other by using a frequency domain 2 OCC (for example, the subcarrier 0 and the subcarrier 4 form a group). If the terminal device 1 selects the port 1003, in this case, the port 1003 and the port 1000 may be orthogonal to each other by using a frequency domain 2 OCC (for example, the subcarrier 2 and the subcarrier 6 form a group), and the port 1003 and the port 1001 may be orthogonal to each other by using a frequency domain 2 OCC (for example, the subcarrier 2 and the subcarrier 6 form a group).

Certainly, in some embodiments, frequency division multiplexing may also be implemented by expanding subcarriers at odd-numbered positions, or a quantity of orthogonal ports is multiplied by using a dual-symbol DMRS, and at most 16 orthogonal ports may be supported.

In an example in which frequency division multiplexing is implemented by expanding subcarriers at odd-numbered positions, as shown in FIG. 6(b), all subcarriers at odd-numbered positions in the figure may transmit a DMRS sequence, and subcarriers at even-numbered positions do not send any information. In FIG. 4, all subcarriers at even-numbered positions in FIG. 4 may transmit a DMRS sequence, and subcarriers at odd-numbered positions do not send any information. In some embodiments, it is assumed that the terminal device 2 selects the port 1000 based on the OFDM time-frequency resource in FIG. 4, and the DMRS sequence is [a, b]. For example, a symbol a in the DMRS sequence of the terminal device 2 corresponds to a subcarrier 0 in the port 1000, and a symbol b corresponds to a subcarrier 2 in the port 1000. In this case, the terminal device 1 may also select the port 1000 based on an OFDM time-frequency resource in FIG. 6(b), where a symbol a and a symbol b are separately mapped to a subcarrier 1 and a subcarrier 3 in the port 1000. Because the terminal device 1 and the terminal device 2 transmit DMRS sequences on different subcarriers, the DMRS port of the terminal device 1 is orthogonal to the DMRS port of the terminal device 2.

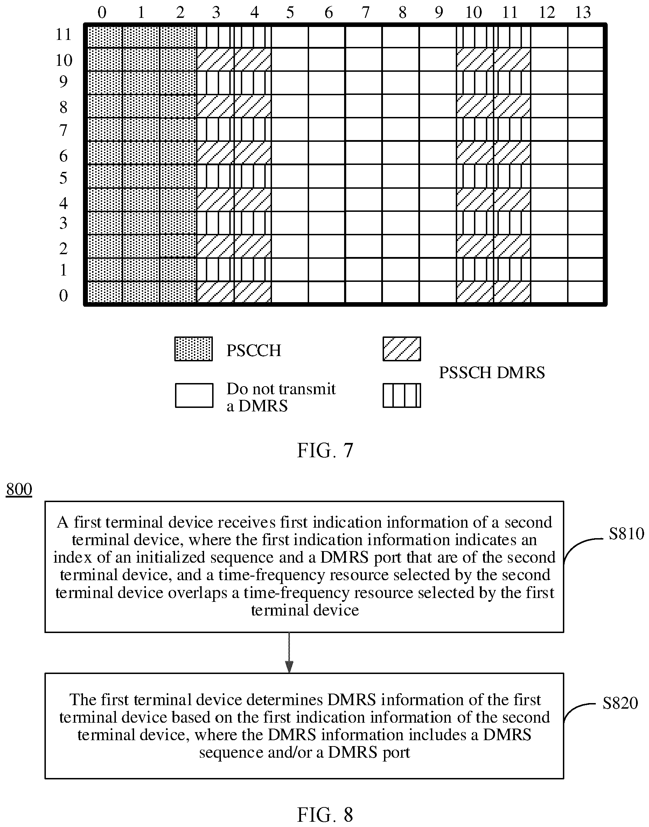

FIG. 7 is a schematic diagram of yet another OFDM time-frequency resource according to an embodiment of this application. Refer to FIG. 7. It can be learned that DMRS sequences may be transmitted by using third and fourth OFDM symbols and tenth and eleventh OFDM symbols in time domain. Compared with transmission of the DMRS sequence shown in FIG. 2, a quantity of orthogonal DMRS ports may be increased in this embodiment of this application.

For expansion of the foregoing time-frequency resource, values of $k'$, $l'$, and $\Delta$ and corresponding $w_f(k')$ and $w_t(l')$ are shown in Table 5.

**Table 5**

| $p$ | $\lambda$ | $\Delta$ | $w_f(k')$ | | $w_t(l')$ | |
|---|---|---|---|---|---|---|
| | | | $k' = 0$ | $k'=1$ | $l' = 0$ | $l' = 1$ |
| 1000 | 0 | 0 | +1 | +1 | +1 | +1 |
| | | | $k' = 0$ | $k'=1$ | $l' = 0$ | $l' = 1$ |
| 1001 | 0 | 0 | +1 | -1 | +1 | +1 |
| 1002 | 1 | 0 | +1 | -1 | +1 | +1 |
| 1003 | 1 | 2 | +1 | -1 | +1 | +1 |
| 1004 | 2 | 1 | +1 | +1 | +1 | +1 |
| 1005 | 2 | 1 | +1 | -1 | +1 | +1 |
| 1006 | 3 | 1 | +1 | -1 | +1 | +1 |
| 1007 | 3 | 3 | +1 | -1 | +1 | +1 |

(continued)

|  |  |  | $k' = 0$ | $k' = 1$ | $l' = 0$ | $l' = 1$ |
|---|---|---|---|---|---|---|
| 1008 | 0 | 0 | +1 | +1 | +1 | -1 |
| 1009 | 0 | 0 | +1 | -1 | +1 | -1 |
| 1010 | 1 | 0 | +1 | -1 | +1 | -1 |
| 1011 | 1 | 2 | +1 | -1 | +1 | -1 |
| 1012 | 2 | 1 | +1 | +1 | +1 | -1 |
| 1013 | 2 | 1 | +1 | -1 | +1 | -1 |
| 1014 | 3 | 1 | +1 | -1 | +1 | -1 |
| 1015 | 3 | 3 | +1 | -1 | +1 | -1 |

In the solution provided in this application, the first terminal device increases the preset ports selectable by the first terminal device by introducing the DMRS port of 1/4 hybrid frequency domain density, so that a quantity of orthogonal DMRS ports can be increased without increasing a time-frequency resource.

Optionally, in some embodiments, the method 300 may further include the following step.

The first terminal device sends third indication information, where the third indication information indicates the DMRS port of the first terminal device, and a quantity of bits occupied by the third indication information is $\lceil \log_2 C_n^m \rceil$ , where a quantity of the preset ports is n, and a quantity of DMRS ports included in the DMRS information of the first terminal device determined by the first terminal device is m.

In this embodiment of this application, after determining the DMRS port of the first terminal device, the first terminal device may indicate the DMRS port of the first terminal device to another terminal device by using the third indication information. The quantity of bits occupied by the third indication information is related to the quantity of the preset ports and the quantity of DMRS ports of the first terminal device.

For example, if port increasing is not considered, the preset ports in this application may include two ports (namely, a port 1000 and a port 1001), and one bit may indicate the DMRS port selected by the first terminal device, as shown in Table 2. When the value of the DMRS port quantity indication field is "0", it indicates that the DMRS port selected by the first terminal device is the port 1000. When the value of the DMRS port quantity indication field is " 1", it indicates that the DMRS ports selected by the first terminal device are the port 1000 and the port 1001.

If port increasing is considered, increasing may be performed in the following manners. Correspondingly, the quantity of bits occupied by the third indication information varies accordingly. It should be noted that, $\lceil \log_2 C_n^m \rceil$ in the following embodiments indicates that is rounded up. For example, $\lceil \log_2 C_4^2 \rceil$ is approximately equal to 2.585. In this case, a value may be 3.

(1) If port increasing by introducing 1/4 hybrid frequency domain density is considered, the preset ports in this application may include four ports (namely, the port 1000, the port 1001, a port 1002, and a port 1003). If the quantity of DMRS ports selected by the first terminal device is 1, the quantity of bits occupied by the third indication information is that $\lceil \log_2 C_4^1 \rceil = 2$ . If the quantity of DMRS ports selected by the first terminal device is 2, the quantity of bits occupied by the third indication information is that $\lceil \log_2 C_4^2 \rceil = 3$ .

As shown in Table 4, if the DMRS port selection indication is "00", it indicates that the DMRS port selected by the first terminal device is the port 1000; if the DMRS port selection indication is "01", it indicates that the DMRS port selected by the first terminal device is the port 1001; if the DMRS port selection indication is "10", it indicates that the DMRS port selected by the first terminal device is the port 1002; and if the DMRS port selection indication is "11", it indicates that the DMRS port selected by the first terminal device is the port 1003.

If the DMRS port selection indication is "000", it indicates that the DMRS ports selected by the first terminal device are the port 1000 and the port 1001; if the DMRS port selection indication is "001", it indicates that the DMRS ports selected by the first terminal device are the port 1000 and the port 1002; if the DMRS port selection indication is "010", it indicates that the DMRS ports selected by the first terminal device are the port 1000 and the port 1003; and so on.

(2) On a basis of introducing 1/4 hybrid frequency domain density, port increasing through frequency division multiplexing is further considered. In this case, the preset ports in this application may include eight ports (namely, the port 1000, the port 1001, the port 1002, the port 1003, a port 1004, a port 1005, a port 1006, and a port 1007). If the quantity of DMRS ports selected by the first terminal device is 1, the quantity of bits occupied by the third indication information is that $\left\lceil \log_2 C_8^1 \right\rceil = 3$. If the quantity of DMRS ports selected by the first terminal device is 2, the quantity of bits occupied by the third indication information is that $\left\lceil \log_2 C_8^2 \right\rceil = 5$.

(3) On a basis of introducing 1/4 hybrid frequency domain density and frequency division multiplexing, dual-symbol port increasing is further considered. In this case, the preset ports in this application may include 16 ports (namely, the port 1000 to a port 1015). If the quantity of DMRS ports selected by the first terminal device is 1, the quantity of bits occupied by the third indication information is that $\left\lceil \log_2 C_{16}^1 \right\rceil = 4$. If the quantity of DMRS ports selected by the first terminal device is 2, the quantity of bits occupied by the third indication information is that

$$\left\lceil \log_2 C_{16}^2 \right\rceil = 7.$$

In addition, in some embodiments, after determining the DMRS information of the first terminal device, the first terminal device may adjust the DMRS information of the first terminal device in real time. For details, refer to the following description.

The method 300 may further include the following steps.

The first terminal device continues to receive the first indication information after determining the DMRS information of the first terminal device; and

the first terminal device re-determines the DMRS information of the first terminal device if a first condition is met.

In this embodiment of this application, after determining the DMRS information of the first terminal device at a current moment, the first terminal device does not always use the determined DMRS information, and may continue to receive the first indication information of the second terminal device. When the first condition is met, the first terminal device re-determines the DMRS information of the first terminal device.

Optionally, in some embodiments, the first condition includes at least one of the following conditions:

the DMRS information of the first terminal device is the same as the DMRS information of the fifth terminal device, where the fifth terminal device includes a terminal device whose service priority is not lower than the service priority of the first terminal device and that is in the second terminal device; and
a quantity of ports of the first terminal device changes.

By using an example in which the DMRS information of the first terminal device is the same as the DMRS information of the fifth terminal device, it is assumed that a system includes five terminal devices: a terminal device 1, a terminal device 2, a terminal device 3, a terminal device 4, and a terminal device 5. It is assumed that the first terminal device is the terminal device 1, the second terminal device includes: the terminal device 2, the terminal device 3, the terminal device 4, and the terminal device 5, and a service priority relationship of the five terminal devices is that the terminal device 2 > the terminal device 3 > the terminal device 1 > the terminal device 5 = the terminal device 4. If the terminal device 1 determines, based on the first indication information of the second terminal device, that a DMRS sequence included in current DMRS information of the terminal device 1 is [a, b] and a DMRS port is a port 1000; and if a DMRS sequence of the terminal device 2 is also [a, b] and a DMRS port is the port 1000, because DMRS information of the terminal device 2 is the same as the DMRS information of the terminal device 1 and a service priority of the terminal device 2 is higher than that of the terminal device 1, the first terminal device may re-determine the DMRS information of the terminal device, to avoid having the same DMRS information as a terminal device with a high service priority or an equal service priority, to reduce impact on channel estimation performance.

By using an example in which the quantity of ports of the first terminal device changes, it is assumed that a system includes five terminal devices: a terminal device 1, a terminal device 2, a terminal device 3, a terminal device 4, and a terminal device 5. If the first terminal device is the terminal device 1 and the second terminal device includes: the terminal device 2, the terminal device 3, the terminal device 4, and the terminal device 5; if the terminal device 1 determines, based on the first indication information of the second terminal device, that a DMRS sequence included in current DMRS information of the terminal device 1 is [a, b] and a DMRS port is a port 1000; and if the quantity of ports of the terminal device 1 changes to 2 in this case, the first terminal device may also re-determine the DMRS information of the first terminal device.

Certainly, in some embodiments, the first condition may also include that the first terminal device has optional higher-priority DMRS information. It is assumed that the terminal device 1 determines, based on the first indication information of the second terminal device in Manner 3, that the DMRS sequence included in the current DMRS information of the terminal device 1 is [a, b] and the DMRS port is the port 1000. In this case, if there is DMRS information that meets the determination in Manner 2, the first terminal device may also re-determine the DMRS information of the first terminal device in Manner 2. A priority of Manner 2 is higher than a priority of Manner 3, in other words, the DMRS information re-determined by the first terminal device may enable the DMRS port of the first terminal device to be orthogonal to DMRS ports of more terminal devices in the second terminal device, so that channel estimation performance can be improved, and reliable communication can be implemented.

In the solution provided in this application, after determining the DMRS information of the first terminal device, the first terminal device continues to receive the first indication information of the second terminal device, and re-determines the DMRS information of the first terminal device when the first condition is met. The first terminal device may adjust the DMRS information determined by the first terminal device in real time based on information indicated by the first indication information, so that the DMRS port determined by the first terminal device is as orthogonal as possible to the DMRS port of the second terminal device at each moment, to improve the channel estimation performance can be improved, and implement the reliable communication.

It should be noted that, values shown in the foregoing embodiments are merely examples for description, and may alternatively be other values. This application should not be particularly limited.

FIG. 8 is a schematic diagram of another communication method 800 according to an embodiment of this application. The method 800 may be performed by any terminal device in the terminal device 20 to the terminal device 40 in FIG. 1, or may be performed by a chip in the terminal device. The method 800 may include steps S810 to S820.

S810: A first terminal device receives first indication information of a second terminal device, where the first indication information indicates an index of an initialized sequence and a DMRS port that are of the second terminal device, and a time-frequency resource selected by the second terminal device overlaps a time-frequency resource selected by the first terminal device.

In this embodiment of this application, there may be one or more second terminal devices. This is not limited.

In this embodiment of this application, that a time-frequency resource selected by the second terminal device overlaps a time-frequency resource selected by the first terminal device may be understood as: The time-frequency resource selected by the second terminal device is entirely or partially the same as the time-frequency resource selected by the first terminal device. In some embodiments, because the time-frequency resource selected by the second terminal device overlaps the time-frequency resource selected by the first terminal device, the second terminal device may be referred to as a conflicting terminal device of the first terminal device, or the first terminal device may be referred to as a conflicting terminal device of the second terminal device.

S820: The first terminal device determines DMRS information of the first terminal device based on the first indication information of the second terminal device, where the DMRS information includes a DMRS sequence and/or a DMRS port.

In this embodiment of this application, the first indication information may indicate the index of the initialized sequence of the second terminal device, and the first terminal device may determine the initialized sequence of the second terminal device and a corresponding DMRS sequence based on the index, to determine the DMRS information of the first terminal device.

In the solution provided in this application, the first terminal device may determine the DMRS information of the first terminal device based on the received first indication information indicating the index of the initialized sequence and the DMRS port that are of the second terminal device. In other words, when determining the DMRS information of the first terminal device, the first terminal device may refer to related information of the second terminal device. In this way, a possibility of selecting a proper DMRS sequence and/or DMRS port can be improved, to improve channel estimation performance, and implement reliable communication.

Optionally, in some embodiments, the DMRS port of the first terminal device is orthogonal to a DMRS port of at least one terminal device in the second terminal device.

Optionally, in some embodiments, that the first terminal device determines DMRS information of the first terminal device based on the first indication information of the second terminal device includes that

the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or
the DMRS information of the first terminal device determined by the first terminal device enables the DMRS port of the first terminal device to be orthogonal to a DMRS port of a third terminal device, where the third terminal device includes a terminal device whose RSRP is greater than a first threshold in the second terminal device; or
the DMRS information of the first terminal device determined by the first terminal device enables the DMRS port of the first terminal device to be orthogonal to a DMRS port of a fourth terminal device, where the fourth terminal device includes a terminal device whose service priority is not lower than a service priority of the first terminal device and that is in the third terminal device; or
the DMRS information of the first terminal device determined by the first terminal device enables the DMRS information of the first terminal device to be different from the DMRS information of the second terminal device; or
the DMRS sequence of the first terminal device is initialized and generated based on a cyclic redundancy check CRC of a first physical sidelink control channel PSCCH of the first terminal device.

Optionally, in some embodiments, the DMRS information of the first terminal device determined by the first terminal device enables the DMRS port of the first terminal device to be orthogonal to the DMRS port of the third terminal device, and enables the DMRS information of the first terminal device to be different from DMRS information of a device other than the third terminal device in the second terminal device; or
the DMRS information of the first terminal device determined by the first terminal device enables the DMRS port of the first terminal device to be orthogonal to the DMRS port of the third terminal device, and enables the DMRS information of the first terminal device to be different from DMRS information of a fifth terminal device, where the fifth terminal device includes a terminal device whose service priority is not lower than the service priority of the first terminal device and that is in the second terminal device.

Optionally, in some embodiments, the DMRS information of the first terminal device determined by the first terminal device enables the DMRS port of the first terminal device to be orthogonal to the DMRS port of the fourth terminal device, and enables the DMRS information of the first terminal device determined by the first terminal device to be different from DMRS information of a device other than the fourth terminal device in the third terminal device; or
the DMRS information of the first terminal device determined by the first terminal device enables the DMRS port of the first terminal device to be orthogonal to the DMRS port of the fourth terminal device, and enables the DMRS information of the first terminal device to be different from the DMRS information of the fifth terminal device, where the fifth terminal device includes a terminal device whose service priority is not lower than the service priority of the first terminal device and that is in the second terminal device.

Optionally, in some embodiments, that the first terminal device determines DMRS information of the first terminal device based on the first indication information of the second terminal device includes that
the first terminal device determines the DMRS information of the first terminal device based on the first indication information of the second terminal device in at least one of the following manners:

the DMRS information of the first terminal device determined by the first terminal device enables the DMRS port of the first terminal device to be orthogonal to the DMRS port of the second terminal device; or
the DMRS information of the first terminal device determined by the first terminal device enables the DMRS port of the first terminal device to be orthogonal to a DMRS port of a fifth terminal device, where the fifth terminal device includes a terminal device whose service priority is not lower than a service priority of the first terminal device and that is in the second terminal device; or
the DMRS information of the first terminal device determined by the first terminal device enables the DMRS port of the first terminal device to be orthogonal to a DMRS port of a sixth terminal device, where the sixth terminal device includes a terminal device whose RSRP is greater than a first threshold in the fifth terminal device; or
the DMRS information of the first terminal device determined by the first terminal device enables the DMRS information of the first terminal device to be different from the DMRS information of the second terminal device; or
the DMRS sequence of the first terminal device is initialized and generated based on a cyclic redundancy check CRC of a first physical sidelink control channel PSCCH of the first terminal device.

Optionally, in some embodiments, the DMRS information of the first terminal device determined by the first terminal device enables the DMRS port of the first terminal device to be orthogonal to the DMRS port of the fifth terminal device, and enables the DMRS information of the first terminal device to be different from DMRS information of a device other than the fifth terminal device in the second terminal device; or
the DMRS information of the first terminal device determined by the first terminal device enables the DMRS port of the first terminal device to be orthogonal to the DMRS port of the fifth terminal device, and enables the DMRS information of the first terminal device to be different from the DMRS information of the third terminal device, where the third terminal device includes a terminal device whose RSRP is greater than the first threshold in the second terminal device.

Optionally, in some embodiments, the DMRS information of the first terminal device determined by the first terminal device enables the DMRS port of the first terminal device to be orthogonal to the DMRS port of the sixth terminal device, and enables the DMRS information of the first terminal device to be different from DMRS information of a device other than the sixth terminal device in the fifth terminal device; or

the DMRS information of the first terminal device determined by the first terminal device enables the DMRS port of the first terminal device to be orthogonal to the DMRS port of the sixth terminal device, and enables the DMRS information of the first terminal device to be different from the DMRS information of the fifth terminal device.

Optionally, in some embodiments, the method 800 further includes the following step.

The first terminal device obtains second indication information, where the second indication information indicates k initialized sequences, and k is an integer greater than or equal to 1.

That the first terminal device determines DMRS information of the first terminal device based on the first indication information of the second terminal device includes that

the first terminal device determines, based on the first indication information of the second terminal device and the second indication information, an initialized sequence of the terminal device from the k initialized sequences to generate a DMRS sequence, where a DMRS sequence of the first terminal device belongs to DMRS sequences generated by using the k initialized sequences.

Optionally, in some embodiments, the second indication information is pre-configuration information of the first terminal device; or

the second indication information is indication information sent by a network device; or

the second indication information is indication information sent by another terminal device other than the first terminal device.

Optionally, in some embodiments, the second indication information indicates at least one piece of the following information: an initial group identity GID, a quantity k of initialized sequences, and a step size $\omega$; and

the k initialized sequences include:

$$VID_i = GID + i * \varpi \,,$$

where i is a positive integer not greater than k.

Optionally, in some embodiments, the method 800 further includes the following step.

The first terminal device increases preset ports selectable by the first terminal device by introducing a DMRS port of 1/4 hybrid frequency domain density, where the preset ports include the DMRS port included in the DMRS information of the first terminal device determined by the first terminal device, and the DMRS port of 1/4 hybrid frequency domain density is orthogonal to a DMRS port of 1/2 hybrid frequency domain density.

Optionally, in some embodiments, the method 800 further includes the following step.

The first terminal device sends third indication information, where the third indication information indicates the DMRS port of the first terminal device, and a quantity of bits occupied by the third indication information is $\left\lceil \log_2 C_n^m \right\rceil$, where

a quantity of the preset ports is n, and a quantity of DMRS ports included in the DMRS information of the first terminal device determined by the first terminal device is m.

Optionally, in some embodiments, the method 800 further includes the following steps.

The first terminal device continues to receive the first indication information after determining the DMRS information of the first terminal device; and

the first terminal device re-determines the DMRS information of the first terminal device if a first condition is met.

Optionally, in some embodiments, the first condition includes at least one of the following conditions:

the DMRS information of the first terminal device is the same as the DMRS information of the fifth terminal device, where the fifth terminal device includes a terminal device whose service priority is not lower than the service priority of the first terminal device and that is in the second terminal device; and

a quantity of ports of the first terminal device changes.

For a specific implementation process of the foregoing embodiments, refer to related content in the foregoing method 300. For brevity, details are not described herein again.

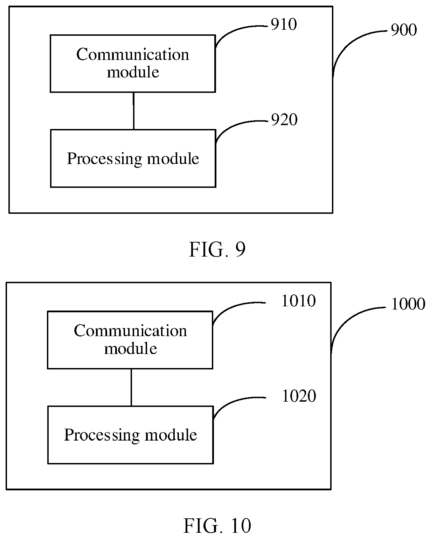

The foregoing describes the communication methods in embodiments of this application in detail with reference to FIG. 1 to FIG. 8. The following describes apparatuses in embodiments of this application in detail with reference to FIG. 9 to FIG. 12.

FIG. 9 is a schematic block diagram of a communication apparatus 900 according to an embodiment of this application. The apparatus 900 may correspond to the terminal device described in the foregoing method 300. In addition, modules in the apparatus 900 are separately configured to perform actions or processing processes performed by the terminal device in the foregoing method 300. As shown in FIG. 9, the communication apparatus 900 may include:

> a communication module 910, configured to receive first indication information of a second terminal device, where the first indication information indicates demodulation reference signal DMRS information of the second terminal device, and a time-frequency resource selected by the second terminal device overlaps a time-frequency resource selected by the communication apparatus; and
> a processing module 920, configured to determine DMRS information of the communication apparatus based on the first indication information of the second terminal device, where
> the DMRS information includes a DMRS sequence and/or a DMRS port.

Optionally, in some embodiments, the DMRS port of the communication apparatus is orthogonal to a DMRS port of at least one terminal device in the second terminal device.

Optionally, in some embodiments, the processing module 920 is further configured to:
determine the DMRS information of the communication apparatus based on the first indication information of the second terminal device in at least one of the following manners:

> the determined DMRS information of the communication apparatus enables the DMRS port of the communication apparatus to be orthogonal to the DMRS port of the second terminal device; or
> the determined DMRS information of the communication apparatus enables the DMRS port of the communication apparatus to be orthogonal to a DMRS port of a third terminal device, where the third terminal device includes a terminal device whose RSRP is greater than a first threshold in the second terminal device; or
> the determined DMRS information of the communication apparatus enables the DMRS port of the communication apparatus to be orthogonal to a DMRS port of a fourth terminal device, where the fourth terminal device includes a terminal device whose service priority is not lower than a service priority of the communication apparatus and that is in the third terminal device; or
> the determined DMRS information of the communication apparatus enables the DMRS information of the communication apparatus to be different from the DMRS information of the second terminal device; or
> the determined DMRS sequence is initialized and generated based on a cyclic redundancy check CRC of a first physical sidelink control channel PSCCH of the communication apparatus.

Optionally, in some embodiments, the determined DMRS information of the communication apparatus enables the DMRS port of the communication apparatus to be orthogonal to the DMRS port of the third terminal device, and enables the DMRS information of the communication apparatus to be different from DMRS information of a device other than the third terminal device in the second terminal device; or
the determined DMRS information of the communication apparatus enables the DMRS port of the communication apparatus to be orthogonal to the DMRS port of the third terminal device, and enables the DMRS information of the communication apparatus to be different from DMRS information of a fifth terminal device, where the fifth terminal device includes a terminal device whose service priority is not lower than the service priority of the communication apparatus and that is in the second terminal device.

Optionally, in some embodiments, the determined DMRS information of the communication apparatus enables the DMRS port of the communication apparatus to be orthogonal to the DMRS port of the fourth terminal device, and enables the DMRS information of the communication apparatus determined by the communication apparatus to be different from DMRS information of a device other than the fourth terminal device in the third terminal device; or
the determined DMRS information of the communication apparatus enables the DMRS port of the communication apparatus to be orthogonal to the DMRS port of the fourth terminal device, and enables the DMRS information of the communication apparatus to be different from the DMRS information of the fifth terminal device, where the fifth terminal device includes a terminal device whose service priority is not lower than the service priority of the communication apparatus and that is in the second terminal device.

Optionally, in some embodiments, the processing module 920 is further configured to:
determine the DMRS information of the communication apparatus based on the first indication information of the second terminal device in at least one of the following manners:

the determined DMRS information of the communication apparatus enables the DMRS port of the communication apparatus to be orthogonal to the DMRS port of the second terminal device; or
the determined DMRS information of the communication apparatus enables the DMRS port of the communication apparatus to be orthogonal to a DMRS port of a fifth terminal device, where the fifth terminal device includes a terminal device whose service priority is not lower than the service priority of the communication apparatus and that is in the second terminal device; or
the determined DMRS information of the communication apparatus enables the DMRS port of the communication apparatus to be orthogonal to a DMRS port of a sixth terminal device, where the sixth terminal device includes a terminal device whose RSRP is greater than a first threshold in the fifth terminal device; or
the determined DMRS information of the communication apparatus enables the DMRS information of the communication apparatus to be different from the DMRS information of the second terminal device; or
the DMRS sequence of the communication apparatus is initialized and generated based on a cyclic redundancy check CRC of a first physical sidelink control channel PSCCH of the communication apparatus.

Optionally, in some embodiments, the determined DMRS information of the communication apparatus enables the DMRS port of the communication apparatus to be orthogonal to the DMRS port of the fifth terminal device, and enables the DMRS information of the communication apparatus to be different from DMRS information of a device other than the fifth terminal device in the second terminal device; or
the determined DMRS information of the communication apparatus enables the DMRS port of the communication apparatus to be orthogonal to the DMRS port of the fifth terminal device, and enables the DMRS information of the communication apparatus to be different from the DMRS information of the third terminal device, where the third terminal device includes a terminal device whose RSRP is greater than the first threshold in the second terminal device.

Optionally, in some embodiments, the determined DMRS information of the communication apparatus enables the DMRS port of the communication apparatus to be orthogonal to the DMRS port of the sixth terminal device, and enables the DMRS information of the communication apparatus to be different from DMRS information of a device other than the sixth terminal device in the fifth terminal device; or
the determined DMRS information of the communication apparatus enables the DMRS port of the communication apparatus to be orthogonal to the DMRS port of the sixth terminal device, and enables the DMRS information of the communication apparatus to be different from the DMRS information of the fifth terminal device.

Optionally, in some embodiments, the processing module 920 is further configured to:

generate k initialized sequences based on second indication information, where each sequence in the k initialized sequences is for generating one DMRS sequence, and k is an integer greater than or equal to 1; and
select, based on the first indication information of the second terminal device, an initialized sequence from the k initialized sequences to generate a DMRS sequence, where a DMRS sequence of the first terminal device belongs to DMRS sequences generated by using the k initialized sequences.

Optionally, in some embodiments, the second indication information is pre-configuration information of the communication apparatus; or

the second indication information is indication information sent by a network device; or
the second indication information is indication information sent by another terminal device other than the communication apparatus.

Optionally, in some embodiments, the second indication information indicates at least one piece of the following information: an initial group identity GID, a quantity k of initialized sequences, and a step size $\omega$; and
the processing module is further configured to:
generate the k initialized sequences based on the following formula:

$$VID_i = GID + i * \varpi,$$

where i is a positive integer not greater than k.

Optionally, in some embodiments, the processing module 920 is further configured to:
increase preset ports selectable by the communication apparatus by introducing a DMRS port of 1/4 hybrid frequency domain density, where the preset ports include the DMRS port included in the DMRS information of the communication apparatus determined by the communication apparatus, and the DMRS port of 1/4 hybrid frequency domain density is orthogonal to a DMRS port of 1/2 hybrid frequency domain density.

Optionally, in some embodiments, the communication module 910 is further configured to:

send third indication information, where the third indication information indicates the DMRS port of the communication

$$\left\lceil \log_2 C_n^m \right\rceil$$

apparatus, and a quantity of bits occupied by the third indication information is , where a quantity of the preset ports is n, and a quantity of DMRS ports included in the DMRS information of the communication apparatus determined by the communication apparatus is m.

Optionally, in some embodiments, the communication module 910 is further configured to:

continue to receive the first indication information after the DMRS information of the communication apparatus is determined; and
the processing module 920 is further configured to:
re-determine the DMRS information of the communication apparatus if a first condition is met.

Optionally, in some embodiments, the first condition includes at least one of the following conditions:

the DMRS information of the communication apparatus is the same as the DMRS information of the fifth terminal device, where the fifth terminal device includes a terminal device whose service priority is not lower than the service priority of the communication apparatus and that is in the second terminal device; and
a quantity of ports of the communication apparatus changes.

FIG. 10 is a schematic block diagram of a communication apparatus 1000 according to an embodiment of this application. The apparatus 1000 may correspond to the terminal device described in the foregoing method 800. In addition, modules in the apparatus 1000 are separately configured to perform actions or processing processes performed by the terminal device in the foregoing method 800. As shown in FIG. 10, the communication apparatus 1000 may include:

a communication module 1010, configured to receive first indication information of a second terminal device, where the first indication information indicates an index of an initialized sequence and a demodulation reference signal DMRS port that are of the second terminal device, and a time-frequency resource selected by the second terminal device overlaps a time-frequency resource selected by the communication apparatus; and
a processing module 1020, configured to determine DMRS information of the communication apparatus based on the first indication information of the second terminal device, where the DMRS information includes a DMRS sequence and/or a DMRS port.

Optionally, in some embodiments, the DMRS port of the communication apparatus is orthogonal to a DMRS port of at least one terminal device in the second terminal device.

Optionally, in some embodiments, the processing module 1020 is further configured to:

determine the DMRS information of the communication apparatus based on the first indication information of the second terminal device in at least one of the following manners:
the determined DMRS information of the communication apparatus enables the DMRS port of the communication apparatus to be orthogonal to the DMRS port of the second terminal device; or
the determined DMRS information of the communication apparatus enables the DMRS port of the communication apparatus to be orthogonal to a DMRS port of a third terminal device, where the third terminal device includes a terminal device whose RSRP is greater than a first threshold in the second terminal device; or
the determined DMRS information of the communication apparatus enables the DMRS port of the communication apparatus to be orthogonal to a DMRS port of a fourth terminal device, where the fourth terminal device includes a terminal device whose service priority is not lower than a service priority of the communication apparatus and that is in the third terminal device; or
the determined DMRS information of the communication apparatus enables the DMRS information of the communication apparatus to be different from the DMRS information of the second terminal device; or
the determined DMRS sequence is initialized and generated based on a cyclic redundancy check CRC of a first physical sidelink control channel PSCCH of the communication apparatus.

Optionally, in some embodiments, the determined DMRS information of the communication apparatus enables the DMRS port of the communication apparatus to be orthogonal to the DMRS port of the third terminal device, and enables the DMRS information of the communication apparatus to be different from DMRS information of a device other than the third terminal device in the second terminal device; or

the determined DMRS information of the communication apparatus enables the DMRS port of the communication apparatus to be orthogonal to the DMRS port of the third terminal device, and enables the DMRS information of the communication apparatus to be different from DMRS information of a fifth terminal device, where the fifth terminal device includes a terminal device whose service priority is not lower than the service priority of the communication apparatus and that is in the second terminal device.

Optionally, in some embodiments, the determined DMRS information of the communication apparatus enables the DMRS port of the communication apparatus to be orthogonal to the DMRS port of the fourth terminal device, and enables the DMRS information of the communication apparatus determined by the communication apparatus to be different from DMRS information of a device other than the fourth terminal device in the third terminal device; or

the determined DMRS information of the communication apparatus enables the DMRS port of the communication apparatus to be orthogonal to the DMRS port of the fourth terminal device, and enables the DMRS information of the communication apparatus to be different from the DMRS information of the fifth terminal device, where the fifth terminal device includes a terminal device whose service priority is not lower than the service priority of the communication apparatus and that is in the second terminal device.

Optionally, in some embodiments, the processing module 1020 is further configured to:

determine the DMRS information of the communication apparatus based on the first indication information of the second terminal device in at least one of the following manners:

the determined DMRS information of the communication apparatus enables the DMRS port of the communication apparatus to be orthogonal to the DMRS port of the second terminal device; or

the determined DMRS information of the communication apparatus enables the DMRS port of the communication apparatus to be orthogonal to a DMRS port of a fifth terminal device, where the fifth terminal device includes a terminal device whose service priority is not lower than the service priority of the communication apparatus and that is in the second terminal device; or

the determined DMRS information of the communication apparatus enables the DMRS port of the communication apparatus to be orthogonal to a DMRS port of a sixth terminal device, where the sixth terminal device includes a terminal device whose RSRP is greater than a first threshold in the fifth terminal device; or

the determined DMRS information of the communication apparatus enables the DMRS information of the communication apparatus to be different from the DMRS information of the second terminal device; or

the DMRS sequence of the communication apparatus is initialized and generated based on a cyclic redundancy check CRC of a first physical sidelink control channel PSCCH of the communication apparatus.

Optionally, in some embodiments, the determined DMRS information of the communication apparatus enables the DMRS port of the communication apparatus to be orthogonal to the DMRS port of the fifth terminal device, and enables the DMRS information of the communication apparatus to be different from DMRS information of a device other than the fifth terminal device in the second terminal device; or

the determined DMRS information of the communication apparatus enables the DMRS port of the communication apparatus to be orthogonal to the DMRS port of the fifth terminal device, and enables the DMRS information of the communication apparatus to be different from the DMRS information of the third terminal device, where the third terminal device includes a terminal device whose RSRP is greater than the first threshold in the second terminal device.

Optionally, in some embodiments, the determined DMRS information of the communication apparatus enables the DMRS port of the communication apparatus to be orthogonal to the DMRS port of the sixth terminal device, and enables the DMRS information of the communication apparatus to be different from DMRS information of a device other than the sixth terminal device in the fifth terminal device; or

the determined DMRS information of the communication apparatus enables the DMRS port of the communication apparatus to be orthogonal to the DMRS port of the sixth terminal device, and enables the DMRS information of the communication apparatus to be different from the DMRS information of the fifth terminal device.

Optionally, in some embodiments, the processing module 1020 is further configured to:

generate k initialized sequences based on second indication information, where each sequence in the k initialized sequences is for generating one DMRS sequence, and k is an integer greater than or equal to 1; and

select, based on the first indication information of the second terminal device, an initialized sequence from the k initialized sequences to generate a DMRS sequence, where a DMRS sequence of the first terminal device belongs to DMRS sequences generated by using the k initialized sequences.

Optionally, in some embodiments, the second indication information is pre-configuration information of the communication apparatus; or

the second indication information is indication information sent by a network device; or
the second indication information is indication information sent by another terminal device other than the communication apparatus.

Optionally, in some embodiments, the second indication information indicates at least one piece of the following information: an initial group identity GID, a quantity k of initialized sequences, and a step size $\omega$; and
the processing module is further configured to:

$$VID_i = GID + i * \varpi$$

generate the k initialized sequences based on the following formula: , where i is a positive integer not greater than k.

Optionally, in some embodiments, the processing module 1020 is further configured to:
increase preset ports selectable by the communication apparatus by introducing a DMRS port of 1/4 hybrid frequency domain density, where the preset ports include the DMRS port included in the DMRS information of the communication apparatus determined by the communication apparatus, and the DMRS port of 1/4 hybrid frequency domain density is orthogonal to a DMRS port of 1/2 hybrid frequency domain density.

Optionally, in some embodiments, the communication module 1010 is further configured to:

send third indication information, where the third indication information indicates the DMRS port of the communication apparatus, and a quantity of bits occupied by the third indication information is $\left\lceil \log_2 C_n^m \right\rceil$ , where a quantity of the preset ports is n, and a quantity of DMRS ports included in the DMRS information of the communication apparatus determined by the communication apparatus is m.

Optionally, in some embodiments, the communication module 1010 is further configured to:

continue to receive the first indication information after the DMRS information of the communication apparatus is determined; and
the processing module 1020 is further configured to:
re-determine the DMRS information of the communication apparatus if a first condition is met.

Optionally, in some embodiments, the first condition includes at least one of the following conditions:

the DMRS information of the communication apparatus is the same as the DMRS information of the fifth terminal device, where the fifth terminal device includes a terminal device whose service priority is not lower than the service priority of the communication apparatus and that is in the second terminal device; and
a quantity of ports of the communication apparatus changes.

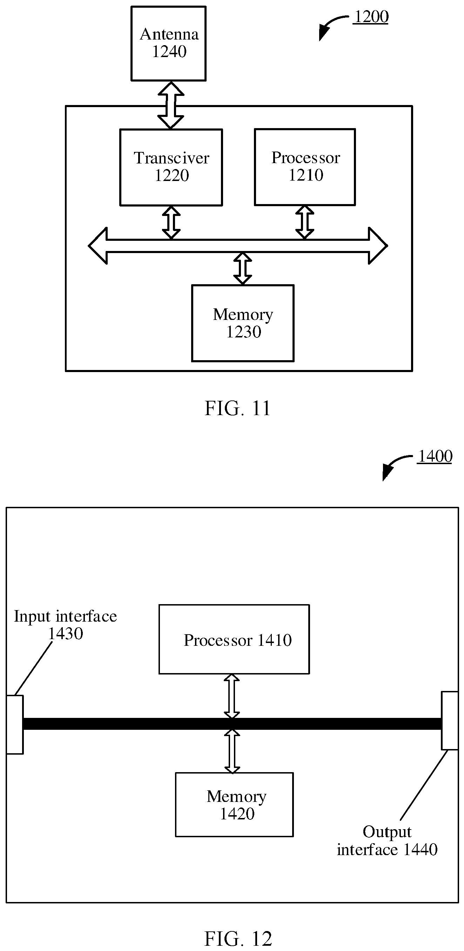

FIG. 11 is a schematic diagram of a structure of a communication apparatus according to an embodiment of this application. For example, the communication apparatus 1200 may be the terminal device in the foregoing embodiments. As shown in FIG. 11, the communication apparatus 1200 includes a processor 1210 and a transceiver 1220. Optionally, the communication apparatus 1200 further includes a memory 1230. The processor 1210, the transceiver 1220, and the memory 1230 may communicate with each other through an internal connection path, to transfer a control signal and/or a data signal. The memory 1230 is configured to store a computer program. The processor 1210 is configured to invoke the computer program from the memory 1230 and run the computer program, to control the transceiver 1220 to receive and send a signal.

The processor 1210 and the memory 1230 may be combined into one processing apparatus. The processor 1210 is configured to execute program code stored in the memory 1230 to implement functions of the terminal device in the foregoing method embodiments. During specific implementation, the memory 1230 may alternatively be integrated into the processor 1210, or may be independent of the processor 1210. The transceiver 1220 may be implemented by using a transceiver circuit.

The communication apparatus may further include an antenna 1240, configured to send, by using a radio signal, uplink data or uplink control signaling that is output by the transceiver 1220, or send received downlink data or downlink control signaling to the transceiver 1220 for further processing.

It should be understood that the apparatus 1200 may correspond to the terminal devices in the method 300 and the method 800 according to embodiments of this application. Alternatively, the apparatus 1200 may be a chip or a component applied to a terminal device. In addition, each component in the apparatus 1200 implements corresponding procedures in the method 300 and the method 800. Specifically, the memory 1230 is configured to store program code, so that when executing the program code, the processor 1210 controls the transceiver 1220 to perform a process of S310 in the method 300, and the processor 1210 is configured to perform the process of S320 in the method 300; or the processor 1210 controls the transceiver 1220 to perform a process of S810 in the method 800, and the processor 1210 is configured to perform the process of S820 in the method 800. A specific process in which each component performs the foregoing corresponding steps has been described in detail in the method 300 and the method 800. For brevity, details are not described herein again.

FIG. 12 is a schematic diagram of a structure of a chip according to an embodiment of this application. A chip 1400 shown in FIG. 12 includes a processor 1410. The processor 1410 may invoke a computer program from a memory and run the computer program, to implement the method in embodiments of this application.

Optionally, as shown in FIG. 12, the chip 1400 may further include a memory 1420. The processor 1410 may invoke the computer program from the memory 1420 and run the computer program, to implement steps in the method 300 or the method 800 in embodiments of this application.

The memory 1420 may be an independent component independent of the processor 1410, or may be integrated into the processor 1410.

Optionally, the chip 1400 may further include an input interface 1430. The processor 1410 may control the input interface 1430 to communicate with another device or chip, and specifically, may obtain information or data sent by another device or chip.

Optionally, the chip 1400 may further include an output interface 1440. The processor 1410 may control the output interface 1440 to communicate with another device or chip, and specifically, may output information or data to another device or chip.

Optionally, the chip may be applied to the terminal device in embodiments of this application, and the chip may implement corresponding procedures implemented by the terminal device in the methods in embodiments of this application. For brevity, details are not described herein again.

It should be understood that, the chip mentioned in this embodiment of this application may also be referred to as a system-level chip, a system chip, a chip system, a system on chip, or the like.

An embodiment of this application further provides a computer-readable storage medium, configured to store a computer program.

Optionally, the computer-readable storage medium may be applied to the terminal device in embodiments of this application, and the computer storage medium enables a computer to perform corresponding procedures implemented by the terminal device in the methods in embodiments of this application. For brevity, details are not described herein again.

An embodiment of this application further provides a computer program product, including computer program instructions.

Optionally, the computer program product may be applied to the terminal device in embodiments of this application, and the computer program instructions enable a computer to perform corresponding procedures implemented by the terminal device in the methods in embodiments of this application. For brevity, details are not described herein again.

An embodiment of this application further provides a computer program.

Optionally, the computer program may be applied to the terminal device in embodiments of this application. When the computer program runs on a computer, the computer is enabled to perform corresponding procedures implemented by the terminal device in the methods in embodiments of this application. For brevity, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

Those skilled in the art are able to clearly understand that, for easy and concise description, the specific working processes of the system, apparatus, and module described previously may refer to the corresponding processes in the method embodiment, and are not described herein.

In the several embodiments provided in this application, it should be understood that the disclosed system, apparatus and method may be implemented in other manners. For example, the described apparatus embodiments are merely examples, and the module division is merely logical function division. In actual implementation, there may be another division manner. For example, a plurality of modules or components may be combined. In addition, the displayed or discussed mutual coupling or communication connection may be an indirect coupling or a communication connection through some interfaces, apparatuses, or modules.

In addition, functional modules in embodiments of this application may be integrated into one physical entity, or each of the modules may correspond to one physical entity alone, or two or more modules may be integrated into one physical entity.

When the functions are implemented in the form of a software functional module and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first terminal device, first indication information of a second terminal device, wherein the first indication information indicates demodulation reference signal DMRS information of the second terminal device, and a time-frequency resource selected by the second terminal device overlaps a time-frequency resource selected by the first terminal device; and
   determining, by the first terminal device, DMRS information of the first terminal device based on the first indication information of the second terminal device, wherein
   the DMRS information comprises a DMRS sequence and/or a DMRS port.

2. The method according to claim 1, wherein the DMRS port of the first terminal device is orthogonal to a DMRS port of at least one terminal device in the second terminal device.

3. The method according to claim 1 or 2, wherein the determining, by the first terminal device, DMRS information of the first terminal device based on the first indication information of the second terminal device comprises:
   determining, by the first terminal device, the DMRS information of the first terminal device based on the first indication information of the second terminal device in at least one of the following manners:

   the DMRS information of the first terminal device determined by the first terminal device enables the DMRS port of the first terminal device to be orthogonal to the DMRS port of the second terminal device; or
   the DMRS information of the first terminal device determined by the first terminal device enables the DMRS port of the first terminal device to be orthogonal to a DMRS port of a third terminal device, wherein the third terminal device comprises a terminal device whose RSRP is greater than a first threshold in the second terminal device; or
   the DMRS information of the first terminal device determined by the first terminal device enables the DMRS port of the first terminal device to be orthogonal to a DMRS port of a fourth terminal device, wherein the fourth terminal device comprises a terminal device whose service priority is not lower than a service priority of the first terminal device and that is in the third terminal device; or
   the DMRS information of the first terminal device determined by the first terminal device enables the DMRS information of the first terminal device to be different from the DMRS information of the second terminal device; or
   the DMRS sequence of the first terminal device is initialized and generated based on a cyclic redundancy check CRC of a first physical sidelink control channel PSCCH of the first terminal device.

4. The method according to claim 3, wherein the DMRS information of the first terminal device determined by the first terminal device enables the DMRS port of the first terminal device to be orthogonal to the DMRS port of the third terminal device, and enables the DMRS information of the first terminal device to be different from DMRS information of a device other than the third terminal device in the second terminal device; or

the DMRS information of the first terminal device determined by the first terminal device enables the DMRS port of the first terminal device to be orthogonal to the DMRS port of the third terminal device, and enables the DMRS information of the first terminal device to be different from DMRS information of a fifth terminal device, wherein the fifth terminal device comprises a terminal device whose service priority is not lower than the service priority of the first terminal device and that is in the second terminal device.

5. The method according to claim 3 or 4, wherein the DMRS information of the first terminal device determined by the first terminal device enables the DMRS port of the first terminal device to be orthogonal to the DMRS port of the fourth terminal device, and enables the DMRS information of the first terminal device determined by the first terminal device to be different from DMRS information of a device other than the fourth terminal device in the third terminal device; or

the DMRS information of the first terminal device determined by the first terminal device enables the DMRS port of the first terminal device to be orthogonal to the DMRS port of the fourth terminal device, and enables the DMRS information of the first terminal device to be different from the DMRS information of the fifth terminal device, wherein the fifth terminal device comprises a terminal device whose service priority is not lower than the service priority of the first terminal device and that is in the second terminal device.

6. The method according to any one of claims 1 to 5, wherein the method further comprises:

generating, by the first terminal device, k initialized sequences based on second indication information, wherein each sequence in the k initialized sequences is for generating one DMRS sequence, and k is an integer greater than or equal to 1; and

the determining, by the first terminal device, DMRS information of the first terminal device based on the first indication information of the second terminal device comprises:

selecting, by the first terminal device based on the first indication information of the second terminal device, an initialized sequence from the k initialized sequences to generate a DMRS sequence, wherein a DMRS sequence of the first terminal device belongs to DMRS sequences generated by using the k initialized sequences.

7. The method according to claim 6, wherein the second indication information is pre-configuration information of the first terminal device; or

the second indication information is indication information sent by a network device; or

the second indication information is indication information sent by another terminal device other than the first terminal device.

8. The method according to claim 6 or 7, wherein the second indication information indicates at least one piece of the following information: an initial group identity GID, a quantity k of initialized sequences, and a step size $\omega$; and

the generating, by the first terminal device, k initialized sequences based on second indication information comprises: generating, by the first terminal device, the k initialized sequences based on the following formula:

$$VID_i = GID + i * \varpi,$$

wherein i is a positive integer not greater than k.

9. The method according to any one of claims 1 to 8, wherein the method further comprises: increasing, by the first terminal device, preset ports selectable by the first terminal device by introducing a DMRS port of 1/4 hybrid frequency domain density, wherein the preset ports comprise the DMRS port comprised in the DMRS information of the first terminal device determined by the first terminal device, and the DMRS port of 1/4 hybrid frequency domain density is orthogonal to a DMRS port of 1/2 hybrid frequency domain density.

10. The method according to any one of claims 1 to 9, wherein the method further comprises:

sending, by the first terminal device, third indication information, wherein the third indication information indicates the DMRS port of the first terminal device, and a quantity of bits occupied by the third indication information is

$$\lceil \log_2 C_n^m \rceil$$
, wherein

a quantity of the preset ports is n, and a quantity of DMRS ports comprised in the DMRS information of the first terminal device determined by the first terminal device is m.

11. The method according to any one of claims 1 to 10, wherein the method further comprises:

continuing to receive, by the first terminal device, the first indication information after determining the DMRS information of the first terminal device; and

re-determining, by the first terminal device, the DMRS information of the first terminal device if a first condition is met.

12. The method according to claim 11, wherein the first condition comprises at least one of the following conditions:

the DMRS information of the first terminal device is the same as the DMRS information of the fifth terminal device, wherein the fifth terminal device comprises a terminal device whose service priority is not lower than the service priority of the first terminal device and that is in the second terminal device; and

a quantity of ports of the first terminal device changes.

13. A communication apparatus, comprising:

a communication module, configured to receive first indication information of a second terminal device, wherein the first indication information indicates demodulation reference signal DMRS information of the second terminal device, and a time-frequency resource selected by the second terminal device overlaps a time-frequency resource selected by the communication apparatus ; and

a processing module, configured to determine DMRS information of the communication apparatus based on the first indication information of the second terminal device, wherein

the DMRS information comprises a DMRS sequence and/or a DMRS port.

14. The apparatus according to claim 13, wherein the DMRS port of the communication apparatus is orthogonal to a DMRS port of at least one terminal device in the second terminal device.

15. The apparatus according to claim 13 or 14, wherein the processing module is further configured to:
determine the DMRS information of the communication apparatus based on the first indication information of the second terminal device in at least one of the following manners:

the determined DMRS information of the communication apparatus enables the DMRS port of the communication apparatus to be orthogonal to the DMRS port of the second terminal device; or

the determined DMRS information of the communication apparatus enables the DMRS port of the communication apparatus to be orthogonal to a DMRS port of a third terminal device, wherein the third terminal device comprises a terminal device whose RSRP is greater than a first threshold in the second terminal device; or

the determined DMRS information of the communication apparatus enables the DMRS port of the communication apparatus to be orthogonal to a DMRS port of a fourth terminal device, wherein the fourth terminal device comprises a terminal device whose service priority is not lower than a service priority of the communication apparatus and that is in the third terminal device; or

the determined DMRS information of the communication apparatus enables the DMRS information of the communication apparatus to be different from the DMRS information of the second terminal device; or

the determined DMRS sequence is initialized and generated based on a cyclic redundancy check CRC of a first physical sidelink control channel PSCCH of the communication apparatus.

16. The apparatus according to claim 15, wherein the determined DMRS information of the communication apparatus enables the DMRS port of the communication apparatus to be orthogonal to the DMRS port of the third terminal device, and enables the DMRS information of the communication apparatus to be different from DMRS information of a device other than the third terminal device in the second terminal device; or

the determined DMRS information of the communication apparatus enables the DMRS port of the communication apparatus to be orthogonal to the DMRS port of the third terminal device, and enables the DMRS information of the communication apparatus to be different from DMRS information of a fifth terminal device, wherein the fifth terminal device comprises a terminal device whose service priority is not lower than the service priority of the communication apparatus and that is in the second terminal device.

17. The apparatus according to claim 15 or 16, wherein the determined DMRS information of the communication apparatus enables the DMRS port of the communication apparatus to be orthogonal to the DMRS port of the fourth terminal device, and enables the DMRS information of the communication apparatus determined by the communication apparatus to be different from DMRS information of a device other than the fourth terminal device in the third terminal device; or

the determined DMRS information of the communication apparatus enables the DMRS port of the communication apparatus to be orthogonal to the DMRS port of the fourth terminal device, and enables the DMRS information of the communication apparatus to be different from the DMRS information of the fifth terminal device, wherein the fifth terminal device comprises a terminal device whose service priority is not lower than the service priority of the communication apparatus and that is in the second terminal device.

18. The apparatus according to any one of claims 13 to 17, wherein the processing module is further configured to:

generate k initialized sequences based on second indication information, wherein each sequence in the k initialized sequences is for generating one DMRS sequence, and k is an integer greater than or equal to 1; and select, based on the first indication information of the second terminal device, an initialized sequence from the k initialized sequences to generate a DMRS sequence, wherein a DMRS sequence of the first terminal device belongs to DMRS sequences generated by using the k initialized sequences.

19. The apparatus according to claim 18, wherein the second indication information is pre-configuration information of the communication apparatus; or

the second indication information is indication information sent by a network device; or
the second indication information is indication information sent by another terminal device other than the communication apparatus.

20. The apparatus according to claim 18 or 19, wherein the second indication information indicates at least one piece of the following information: an initial group identity GID, a quantity k of initialized sequences, and a step size $\omega$; and
the processing module is further configured to:
generate the k initialized sequences based on the following formula:

$$VID_i = GID + i * \varpi,$$

wherein i is a positive integer not greater than k.

21. The apparatus according to any one of claims 13 to 20, wherein the processing module is further configured to:
increase preset ports selectable by the communication apparatus by introducing a DMRS port of 1/4 hybrid frequency domain density, wherein the preset ports comprise the DMRS port comprised in the DMRS information of the communication apparatus determined by the communication apparatus, and the DMRS port of 1/4 hybrid frequency domain density is orthogonal to a DMRS port of 1/2 hybrid frequency domain density.

22. The apparatus according to any one of claims 13 to 21, wherein the communication module is further configured to:

send third indication information, wherein the third indication information indicates the DMRS port of the communication apparatus, and a quantity of bits occupied by the third indication information is $\left\lceil \log_2 C_n^m \right\rceil$, wherein a quantity of the preset ports is n, and a quantity of DMRS ports comprised in the DMRS information of the communication apparatus determined by the communication apparatus is m.

23. The apparatus according to any one of claims 13 to 22, wherein the communication module is further configured to:

continue to receive the first indication information after the DMRS information of the communication apparatus is determined; and

the processing module is further configured to:
re-determine the DMRS information of the communication apparatus if a first condition is met.

24. The apparatus according to claim 11, wherein the first condition comprises at least one of the following conditions:

the DMRS information of the communication apparatus is the same as the DMRS information of the fifth terminal device, wherein the fifth terminal device comprises a terminal device whose service priority is not lower than the service priority of the communication apparatus and that is in the second terminal device; and
a quantity of ports of the communication apparatus changes.

25. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement the method according to any one of claims 1 to 12 by using a logic circuit or executing code instructions.

26. A computer-readable storage medium, wherein the computer-readable storage medium stores a computer program, and when the computer program is run, the method according to any one of claims 1 to 12 is implemented.

System 100

Network device 10

Terminal
device 30

Terminal device 20

Terminal
device 40

FIG. 1

FIG. 2

300

A first terminal device receives first indication information of a second terminal device, where the first indication information indicates demodulation reference signal DMRS information of the second terminal device, and a time-frequency resource selected by the second terminal device overlaps a time-frequency resource selected by the first terminal device — S310

The first terminal device determines DMRS information of the first terminal device based on the first indication information of the second terminal device — S320

FIG. 3

Port 1000    Port 1001

PSSCH DMRS

Do not transmit a DMRS

FIG. 4

FIG. 5

Port 1000    Port 1001    Port 1002    Port 1003

FIG. 6(a)

Port 1000    Port 1001

PSSCH DMRS

Do not transmit a DMRS

FIG. 6(b)

|     | 0 | 1 | 2 | 3 | 4 | 5 | 6 | 7 | 8 | 9 | 10 | 11 | 12 | 13 |

FIG. 7

Legend:
- ▦ PSCCH
- ▨ PSSCH DMRS
- □ Do not transmit a DMRS

800

A first terminal device receives first indication information of a second terminal device, where the first indication information indicates an index of an initialized sequence and a DMRS port that are of the second terminal device, and a time-frequency resource selected by the second terminal device overlaps a time-frequency resource selected by the first terminal device — S810

The first terminal device determines DMRS information of the first terminal device based on the first indication information of the second terminal device, where the DMRS information includes a DMRS sequence and/or a DMRS port — S820

FIG. 8

Communication
module — 910

— 900

Processing module — 920

FIG. 9

Communication
module — 1010

— 1000

Processing module — 1020

FIG. 10

Antenna
1240

1200

Transciver
1220

Processor
1210

Memory
1230

FIG. 11

1400

Input interface
1430

Processor 1410

Memory
1420

Output
interface 1440

FIG. 12

<table>
<tr><td colspan="2">INTERNATIONAL SEARCH REPORT</td><td colspan="2">International application No.<br><br>**PCT/CN2022/078788**</td></tr>
</table>

**A.    CLASSIFICATION OF SUBJECT MATTER**

H04L 1/00(2006.01)i

According to International Patent Classification (IPC) or to both national classification and IPC

**B.    FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT; CNKI; WPI; EPODOC; 参考信号, 侧链路, 边链路, 端口, 序列, 相关, 重叠, 干扰, 冲突, RS, DMRS, D2D, V2X, V2V, V2P, sidelink, port, sequence, correlation, overlap, interference, collision

**C.    DOCUMENTS CONSIDERED TO BE RELEVANT**

| Category* | Citation of document, with indication, where appropriate, of the relevant passages | Relevant to claim No. |
|---|---|---|
| X | CN 109314623 A (TELEFONAKTIEBOLAGET LM ERICSSON (PUBL)) 05 February 2019 (2019-02-05)<br>    description, paragraphs [0046]-[0058] | 1-26 |
| A | CN 111769923 A (HUAWEI TECHNOLOGIES CO., LTD.) 13 October 2020 (2020-10-13)<br>    entire document | 1-26 |
| A | CN 107623541 A (HUAWEI TECHNOLOGIES CO., LTD.) 23 January 2018 (2018-01-23)<br>    entire document | 1-26 |
| A | US 2020382354 A1 (INTEL CORPORATION) 03 December 2020 (2020-12-03)<br>    entire document | 1-26 |

☐ Further documents are listed in the continuation of Box C.      ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **07 April 2022** | **26 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/078788**

| Patent document cited in search report | | | Publication date (day/month/year) | Patent family member(s) | | | Publication date (day/month/year) |
|---|---|---|---|---|---|---|---|
| CN | 109314623 | A | 05 February 2019 | RU | 2698322 | C1 | 26 August 2019 |
| | | | | WO | 2017178993 | A1 | 19 October 2017 |
| | | | | US | 2019141675 | A1 | 09 May 2019 |
| | | | | EP | 3443701 | A1 | 20 February 2019 |
| | | | | IN | 201837039956 | A | 16 November 2018 |
| | | | | ZA | 201806920 | A | 26 February 2020 |
| CN | 111769923 | A | 13 October 2020 | WO | 2020200056 | A1 | 08 October 2020 |
| CN | 107623541 | A | 23 January 2018 | EP | 3474615 | A1 | 24 April 2019 |
| | | | | US | 2019150159 | A1 | 16 May 2019 |
| | | | | WO | 2018010478 | A1 | 18 January 2018 |
| US | 2020382354 | A1 | 03 December 2020 | None | | | |

Form PCT/ISA/210 (patent family annex) (January 2015)

**REFERENCES CITED IN THE DESCRIPTION**

**Patent documents cited in the description**

- CN 202110251150X
- CN 202110480107